(19) Europäisches Patentamt
European Patent Office
Office européen des brevets

(11) EP 1 936 835 A2

(12) EUROPEAN PATENT APPLICATION

(43) Date of publication:
25.06.2008 Bulletin 2008/26

(51) Int Cl.:
*H04B 7/185* (2006.01)

(21) Application number: 07023769.8

(22) Date of filing: 07.12.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 18.12.2006 US 612006

(71) Applicant: HARRIS CORPORATION
Melbourne, Florida 32919 (US)

(72) Inventors:
• Beadle, Edward R.
Melbourne
FL 32940 (US)
• Dishman, John F.
Melbourne
FL 32940 (US)

(74) Representative: Schmidt, Steffen J.
Wuesthoff & Wuesthoff
Patent- und Rechtsanwälte
Schweigerstrasse 2
81541 München (DE)

(54) **Track state and received noise power-based mechanism for selecting demodulator processing path in spatial diversity, multi-demodulator receiver system**

(57) A receiver terminal has plural demodulators coupled to spatially diverse signal receiving apertures with different views of a transmitter. A controller monitors the track state of the time/frequency error tracker and received noise power of each demodulator. Timing error and frequency error measurements from whichever demodulator's time/frequency tracker exhibits the best performance, and corrected to account for the spatial diversity of the signal receiving apertures, are coupled by the controller to another demodulator to update its time/frequency tracker.

FIG. 5

EP 1 936 835 A2

**Description**

The present invention relates in general to communication systems and subsystems thereof, wherein either the transmitter terminal and/or receiver terminal may be a mobile platform, with possibly high dynamic motion and possibly non-zero and/or non-constant acceleration between the transmitter terminal and the receiver terminal, such as, but not limited to a satellite communication system of the type disclosed in the above-referenced '868 application. The present invention is particularly directed to a track state- and received noise power-based mechanism for selecting which of a plurality of demodulators, which are coupled to spatially diverse signal receiving apertures having respectively different views of the transmitter (satellite), and is operative to perform time recovery and frequency recovery of downlinked time and frequency hopped multi-channel signals, is to be used to recover data contained in the received signal for a respective channel.

Successful operation of a communication system requires time and frequency synchronization between the transmitter and receiver. In order to maximize the availability of link resources for the transport of information, it is desirable that link resources used for synchronization be minimized. In a system wherein there is relative motion between the transmitter and receiver, such as in a satellite or airborne communication system, cell phone system, and the like, this problem becomes more complex, due to kinematic parameters associated with motion, particularly, acceleration by either or both of the transmitter or receiver.

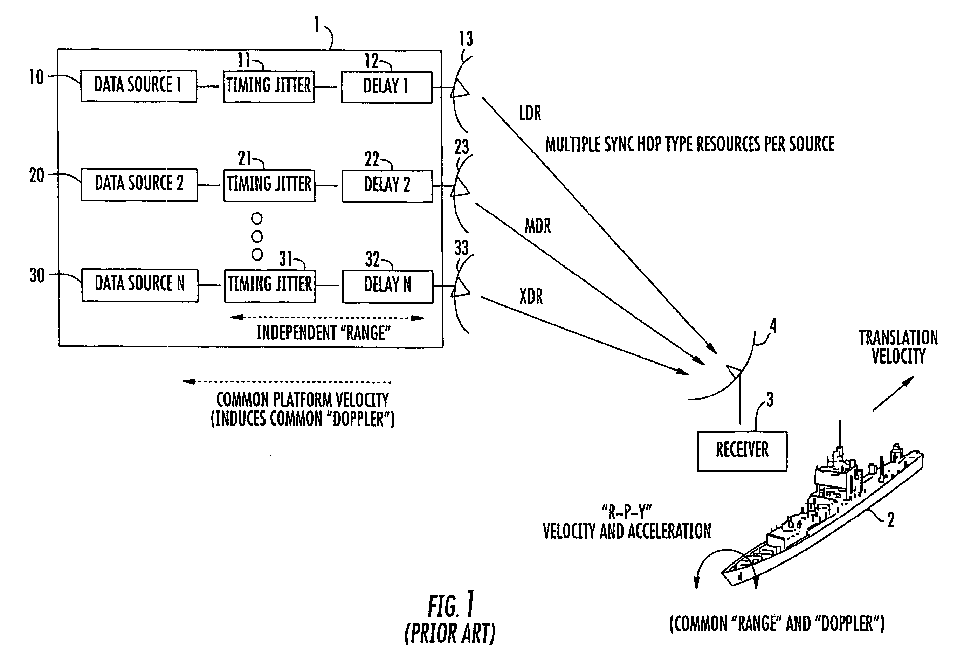

Figure 1 diagrammatically illustrates a non-limiting, reduced complexity, example of a satellite communication (SATCOM) system of the type described in the above-referenced '868 application, that is subject to such kinematic influences. As shown therein, the system includes a satellite 1, which serves as a platform for a transmitter terminal containing one or more data sources, that transmit to a receiver terminal 3, mounted on a (terrestrial) platform 2, such as a ship, which is dynamic. In the illustrated example, satellite 1 is shown as containing a plurality (e.g., three) respectively different data rate sources 10, 20 and 30, which will be referred to individually as LDR, MDR and XDR channels (corresponding to a relatively low data rate (LDR) channel, an intermediate or medium data rate (MDR) channel, and a relatively high data rate (XDR) channel). Because these sources are supported by a common transmit platform (satellite 1), movement of the satellite will introduce a substantially common range (timing) error, as well as a common velocity (frequency) error, into each source's forward link signal.

There are somewhat independent payload timing errors/jitters 11, 21, 31 and delays or offsets 12, 22 and 33 between the LDR, MDR, and XDR channels, as they are processed in slightly different manners prior to arriving at their transmit antennas 13, 23 and 33. All of the transmit signals/channels (LDR, MDR and XDR) undergo a common Doppler shift, which is governed by the motion of the satellite 1 relative to the receive terminal 3 on the ship 2 which, as noted above, is dynamic. The Doppler shift for the individual LDR, MDR, and XDR signals is dependent on the transmitter hop frequency for each signal and the relative line-of-sight (LOS) velocity between the transmitter and receiver platforms.

As a result, for frequency-hopped signals, the signals will appear to have time-varying Doppler, which significantly complicates timing and frequency acquisition using conventional phase locked loop (PLL)-based designs. Further, where there is acceleration along the LOS (which occurs in the ship-borne receiver environment of the system shown in Figure 1), high order PLLs must be used. Unfortunately, high-order PLLs have limited utility in practical systems due to difficulty in design and stabilization.

In order to receive and recover data communication signals from the satellite downlink, it is necessary that the receiver terminal have some a priori knowledge of the downlink signal it is to acquire. The receiver terminal is typically provided with nominal knowledge of the timing and transmit frequency of a synchronization pulse for a given remote data source, by some ancillary facility and knowledge of the pre-planned time/frequency hopping patterns (e.g., TRANSEC). Knowing the time and frequency hopping plan for each transmit source allows the receiver terminal to nominally know when, and at what frequency, to look for synchronization hops, which are the resource exploited by the receiver terminal to make time and frequency error measurements, and adjust the receiver terminal's time and frequency control, per transmitted communication signal, so that data may be recovered. In a typical application, a set of synchronization hops per signal may be reserved in the link. In the three transmitter source example of Figure 1, there would be three sets of synchronization hops (i.e., coarse, fine and extra-fine) defined per signal source (i.e., the LDR, MDR, and XDR data sources 10, 20 and 30, respectively).

For satellite downlink systems, the orbital path of the satellite is governed by well-known physics, which allows the receiver terminal's associated antenna positioning subsystem to effectively continuously maintain the boresight of the receiver terminal antenna pointed at the satellite. Given knowledge of the direction of the incoming signal, a pseudo-range maintained in the receiver terminal is able to provide a data for locating or determining the range to the transmitter. Pseudo range may be derived from initial nominal range knowledge available from an ancillary source, and is continually updated with range error measurements derived from time error measurements made from synchronization resources.

The receiver terminal must also account for relative LOS motion between itself and the (assumed "at rest") satellite, especially where the receiver terminal is mounted on a dynamic platform, such as a ship. The "at rest" assumption merely adds the true satellite velocity along the LOS to that of the receive terminal component. The relative LOS motion manifests itself as time and frequency errors in the downlink signal that is to be tracked. To account for this motion, the receiver terminal may be supplied with a number of communication and position/motion parameters associated with the satellite and/or the receiver terminal itself (e.g., shipboard navigation data), that are intended to enable the receiver terminal to make, at least coarse, timing and frequency corrections, so that a respective downlink signal may be demodulated and data recovered. However, using a ship's navigation system to compute corrections that compensate for the range (timing) and velocity (frequency) errors in the downlink signal induced by the movement of the ship has shortcomings, including the potential absolute and time-varying latency in receiving the ship's navigation data. In addition, the use of global positioning system (GPS) data would be inadequate, since data for time and frequency corrections must be exceedingly accurate, especially if the data source to be tracked has a relatively high data rate, not to mention the negative impact on receiver complexity.

In a satellite downlink communication system, synchronization hops for each data source (e.g., L, M, and X) will arrive at the receiver terminal at a rate that is dependent on the source type and in a non-periodic manner. For example, in the illustrated system, synchronization hops transmitted by L source 10 may arrive at an average rate that is a multiple of those of M source 20, and the inter-pulse arrival times of the LDR, MDR, and XDR data streams, respectively, may be non-constant due to time-hopping. As pointed out above, PLL-based mechanisms for deriving timing and frequency information used for demodulation cannot readily accommodate such measurement sequence variations and will fail when applied to time and frequency hopped sync signals, particularly in environments subject to kinematic influences that include acceleration.

Although prior art literature has suggested that Kalman filters may be used in the track state of a communication link, none has addressed the relationship between communication synchronization parameters (time and frequency offsets) and kinematic variables, which is the basic problem in a satellite downlink environment, where time difference and range change rate are unknown. In addition to PLL-based proposals and limited use Kalman filter methodologies, other, non-linear, 'Kalman-like' techniques, containing banks of matched non-linear filters - one for each possible frequency (that are highly stylized and matched to individual problems) - have been proposed. However, such schemes will not work in practice for the time and frequency acquisition and tracking problem encountered in a dynamic communication system of the type described above, as their hardware implementations would occupy an unacceptable amount of semiconductor real estate to fit within a few application specific integrated circuits (ASICs), and would consume an extraordinary amount of power, Moreover, if implemented digitally, their associated processors could not process data fast enough to realize a viable solution for data rates of practical interest.

These and other drawbacks of conventional time and frequency recovery and tracking approaches for a system environment subject to kinematic (including acceleration) inputs are successfully remedied by the time/frequency tracker (TFT) module disclosed in the above-referenced '868 application, which employs a Kalman filter, functional parameters of which are derived in accordance with receiver terminal-associated kinematic measurements. These kinematic measurements include range and velocity measurements derived from timing and frequency errors measured on selected synchronization hop resources, the times of transmission and frequencies of which are aperiodically, or pseudo randomly, hopped within one or more signals transmitted from the satellite. These timing and frequency error measurements, as well as acceleration measurements, are combined into kinematic data vectors, which are used to update a Kalman filter kinematic state vector. The Kalman filter kinematic state vector provides updated kinematic state (time/frequency) estimates to a kinematic state estimate processor, which uses the Kalman filter output data to adjust the sampling clock for the receiver terminal processor's associated analog-to-digital converter within the demodulator, to achieve demodulation and recovery of data with improved accuracy.

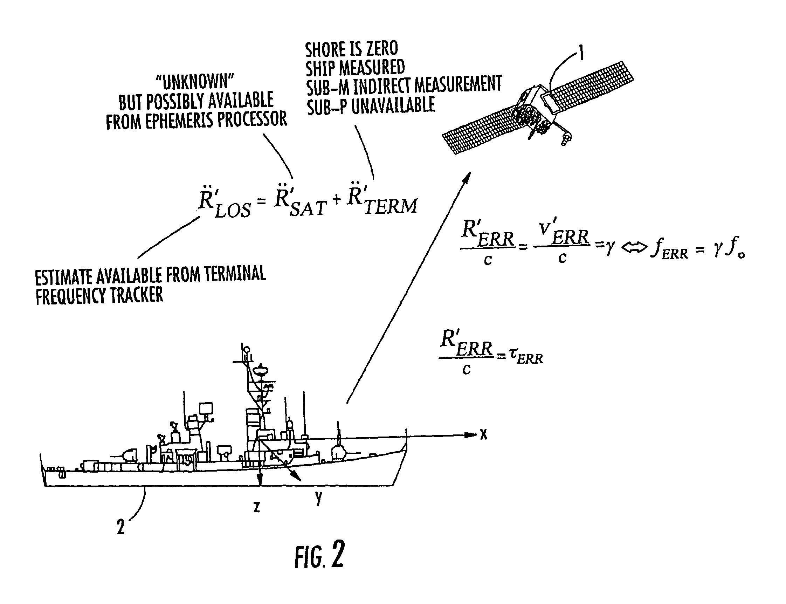

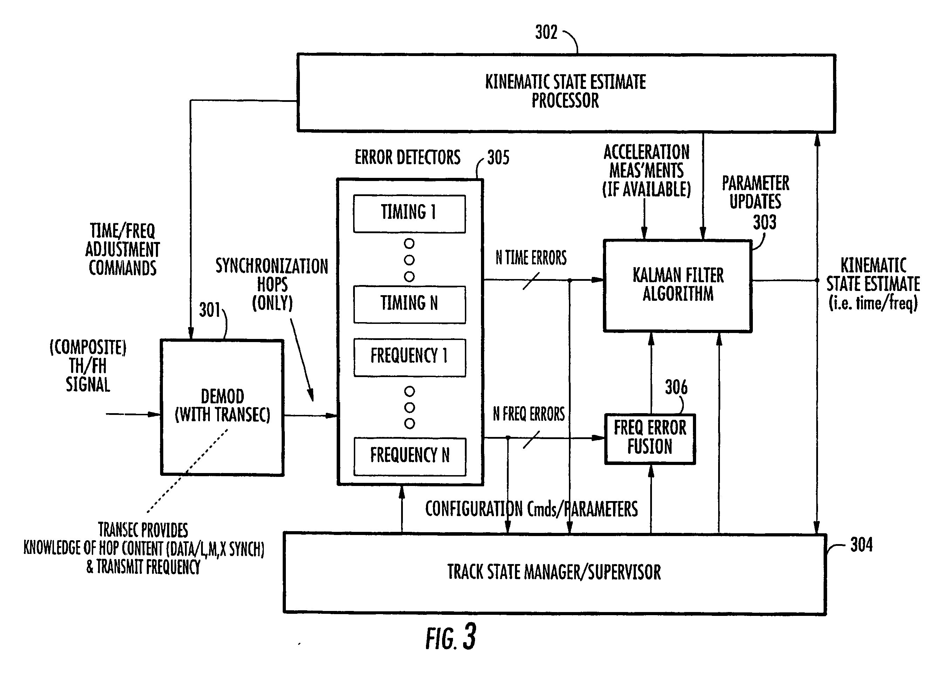

The manner in which these kinematic variables manifest themselves in the satellite communication system of Figure 1 is shown in Figure 2, and the exploiting of such variables by the Kalman filter-based TFT module disclosed in the '868 application is diagrammatically illustrated in the functional block diagram of Figure 3. More particularly, Figure 2 shows satellite 1 as having some time varying downlink communication path (typically curved through the atmosphere) range $R'_{SAT}$ between the antenna of the receiver terminal on the ship 2 in a 'null reference' position and the transmit aperture. This range $R'_{SAT}$, although unknown, may be initially estimated by an ephemeris processor on board the ship 2.

There is an additional term, which is additive to the total LOS range $R'_{LOS}$, that is induced by the time varying motion of the receiver terminal, which causes a time varying range of $R'_{TERM}$. This motion is largely unknown directly, save possibly for measurement of acceleration. The receiver platform (ship 2) has a measurement subsystem (e.g., an accelerometer) coupled with the antenna, that provides a measure of LOS acceleration - which is approximately equal to the double derivative of the boresight range $R'_{LOS}$.

The frequency error measurements and timing error measurements used by the Kalman filter-based time and frequency tracker module disclosed in the '868 application are conducted with respect to a plurality of synchronization pulses per signal (with the error measurements being converted into kinematic equivalents), as well as a kinematic measurements associated with terminal motion. In this way, frequency errors manifest themselves as velocity errors, which correspond to the error in the rate of change of range R', and time errors manifest themselves as LOS range errors.

The frequency error may be expressed as $f_{ERR} = \gamma f_o$ where, $f_o$ is the nominal transmit frequency and $\gamma$, which

is associated with relative motion between the ship and the satellite, is the ratio of LOS velocity to the speed of light 'c'. Thus, frequency error can be used to derive a velocity measurement once the nominal transmit frequency is known. Figure 2 also shows range errors as scaled time errors, where the conversion is given by the speed of light 'c'.

Attention is now directed to Figure 3, which diagrammatically illustrates the overall architecture of the receiver terminal, including a front end demodulator and the Kalman filter-based time/frequency tracker (TFT) module disclosed in the '868 application. As shown therein, input signals from a satellite downlink-monitoring antenna, the front end of the receiver includes a programmable demodulator 301, which inputs signals from an associated low noise amplifier and downconverter subsystem (which may correspond to the antenna and associated receiver terminal mounted on the ship 2 of Figure 2) are supplied. The programmable demodulator 301 is supplied with nominal knowledge (i.e., TRANSEC) of the time and frequency hop patterns of the downlinked signals from a kinematic state estimate processor 302 and uses this information to adjust or refine the tuning of all sampling epochs and oscillators in the receiver terminal.

As detailed in the '868 application, the downlink signal may comprise a continuous stream (such as single frequency-hopped carrier) of multi timeslot data frames, selected sub-frames of which contain one or more synchronization hops, for which time and frequency measurements are available. For the purposes of Kalman filter update processing, the period defining 'simultaneity' is the pseudo sub-frame duration or Kalman update cycle (which is limited to < 10 ms considering the expected dynamics of receive platform motion). Synchronization hops, for which time and frequency measurements are available, are selectively inserted into the time slots of a data frame in a pseudo random manner. As pointed out above, in addition to relying upon timing and frequency errors, derived from the synchronization hops, the Kalman filter of the receiver terminal's time/frequency tracker (TFT) module relies upon kinematic data, such as that sourced from an accelerometer subsystem aligned with the boresight of the receiver terminal's antenna, which is continuously 'pointed' at the satellite, so that timing and frequency errors derived from the synchronization hops are more accurate.

Referring again to Figure 3, the kinematic state estimate processor 302 receives kinematic state estimates, as generated by a Kalman filter operator/algorithm 303. Kalman filter operator 303 has an architecture and coefficient update methodology that uses time and frequency errors derived from received time- and frequency-hopped synchronization pulses, in combination with accelerometer-sourced kinematic updates representative of motion inputs to the receiver terminal, and which produce perturbations in the times of arrival and frequencies of the hopped sync pulses, to produce time and frequency correction values. These time and frequency correction values are employed by the kinematic state estimate processor 302 to generate the time and frequency adjustment commands to the demodulator 301 for refining the frequency and times of transitions in its sampling clock.

Because its operation kinematic domain-based, the Kalman filter operator 303 enables the tracking processor to continuously track, with high accuracy, time and frequency variations in one or more hopped synchronization signals, that are conveyed within pseudo randomly occurring time slots of one or more forward link signals from the transmitter, The Kalman filter is thereby able to provide the basis for synchronization all timing epochs and frequencies needed to demodulate the received signals in a multi-user (e.g., multiple data sources such as L, M and X from a common transmit platform) satellite communication system.

Configuration and operational characteristics of the Kalman filter operator 303 are established by configuration commands and parameters supplied by a (track state manager/supervisor) control processor 304, to enable the Kalman filter to operate with a prescribed of satellite-receiver terminal configuration. The track state manager 304 is also coupled to receive kinematic state estimates produced by Kalman filter operator 303. The track state manager 304 monitors these estimates to determine whether the performance of the Kalman filter operator 303 is acceptable. If the monitored estimates produced by the Kalman filter operator 303 indicate a performance level (kinematic state estimate error) that has departed from a prescribed application dependent tolerance, the track state manager processor 304 provides configuration adjustment commands (i.e., controls the state error covariance matrix, so as to increase the Kalman gain), as necessary, to bring the performance of the Kalman filter operator 303 back with acceptable levels.

A timing and frequency error detection subsystem 305 is coupled to receive data representative of the sampling of detected time- and frequency-hopped synchronization pulses from programmable demodulator 301. Time and frequency error detection subsystem 305 scales the errors to form kinematic measurements of range and velocity error. Range errors are scaled time errors, where the conversion is given by where the constant c is the speed of light. Velocity errors are scaled frequency errors. There is a time and frequency error detector for each data channel in this invention, as each channel is dedicated to a separate beam (e.g., called the L, M, or X beam) from the satellite transmitter. In other cases where the data channels timeshare a carrier or beam then the number of error detection subsystems can be reduced accordingly. As with Kalman filter operator 303, configuration commands and operational parameters for the timing and frequency error detection subsystem 305, as well as those for a frequency error fusion operator 306, are provided by track state manager/supervisor 304.

The timing and frequency error detection subsystem 305 contains a plurality N of timing error detectors: Timing 1, ..., Timing N; and a plurality N of frequency error detectors: Frequency 1, ..., Frequency N. N is selected considering the number of different synchronization pulse types across all the beams (i.e. 3). A respective timing error detector, Timing i, is associated with a particular data rate synchronization pulse, and is operative to conduct timing error measurements on a specified ith one of N synchronization pulses, with the value $\tau_{ERRi}$ of a timing error measurement for that sync hop pulse being coupled to the Kalman filter operator 303. Likewise, a respective frequency error detector, Frequency i, of the timing and frequency error detection subsystem 305, is operative to conduct frequency error measurements on a given ith one of N sync hop pulses, with the value $f_{ERRi}$ the frequency error measurement being coupled to the frequency error fusion operator 306.

Frequency error fusion operator 306 performs maximum likelihood (ML)-based fusion of frequency (velocity) measurement data, in order to exploit the availability, from multiple sensors (frequency error detectors 1-N), of information that represents the same types of measurements (e.g., Doppler). Kalman filter operator 303 accepts these measurements and converts the time and frequency errors into equivalent pseudo-range and pseudo-velocity. Between measurement cycles, the Kalman filter extrapolates pseudo-range, pseudo-velocity and acceleration state variables, so that, when measurement updates are available, the Kalman filter may update its estimates to the minimum mean square error (MMSE) optimum value.

Filter state variables of pseudo-range, pseudo-velocity, and acceleration are directly converted to timing and frequency error control signals, which are employed to update the demodulator 301, which then drives frequency and time errors to zero for each signal, to minimize bit error rate. Control signals are derived by using linear blending, as prescribed by Kalman filter equations, of measured state variables (i.e., pseudo-range, pseudo-velocity, and acceleration) and predicted measurements of state variables at a given time, and the current state estimate from the Kalman filter.

Now, although a communication system employing the Kalman filter-based time/frequency tracker (TFT) module of the type disclosed in the '868 application is capable of performing time and frequency acquisition and tracking in the presence of kinematic variations, in order to do so successfully, it's ability to receive signals downlinked from the satellite (e.g., its signal-receiving line of sight (visibility) to the satellite) must not be substantially impaired (e.g., visually obstructed). Unfortunately, an unobstructed view of the transmitter cannot be guaranteed in every environment in which the receiver may be used.

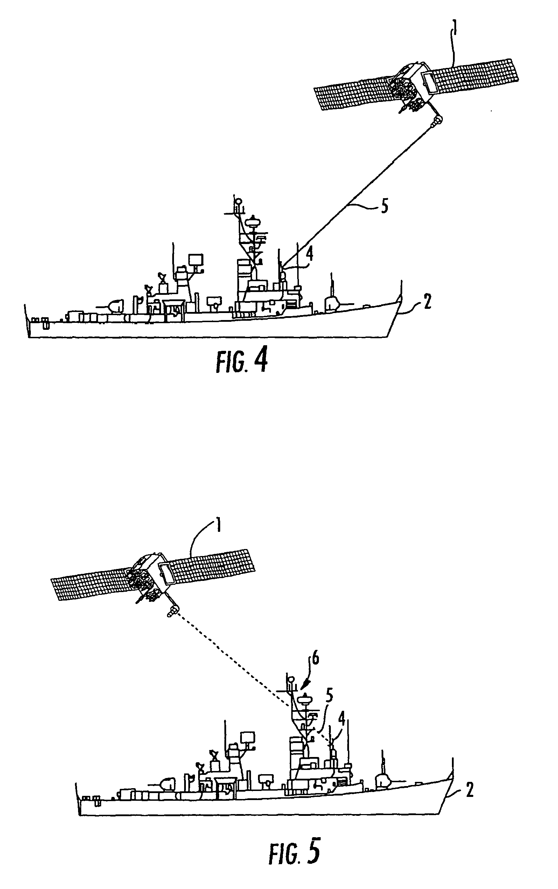

As a non-limiting example, diagrammatically illustrated in Figure 4, the receiver terminal's antenna 4 may be mounted on a location of a dynamic platform, such as at the bow of a ship 2, which may initially offer an essentially clear (unobstructed) view (boresight 5) to the transmitter (satellite 1 having some elevation and azimuth relative to the ship's heading). However, as shown in Figure 5, that view may change (and be subject to obscuration) - for example, as a result of a change (e.g., reversal) in the ship's heading that places the ship's superstructure 6 in the path of the boresight 5 to the satellite 1. As another non-limiting example, a modification of the ship's superstructure adjacent to where the antenna has been installed may cause the antenna's view of the satellite to be blocked or impaired.

In accordance with the present invention, this signal-reception impairment problem is effectively circumvented by means of a track state- and received noise power-based mechanism for selecting which of a plurality of kinematic input-monitoring, Kalman filter-based demodulators, which are coupled to spatially diverse antennas having respectively signal-reception perspectives (different views) of the satellite, and is operative to perform time recovery and frequency recovery of time and frequency hopped data signals of multiple channels (e.g., different user channels having respectively different data rates, such as the LDR, MDR and XDR channels referenced above) downlinked from the satellite, is to be used to recover data in the received signals conveyed over the respective channels.

The track state of a respective demodulator is a primary figure of merit used in the selection process and has a quantized value representative of how well that demodulator's Kalman filter is performing. The higher the demodulator's track state, the better the demodulator's (Kalman filter) performance; this means that a demodulator having a very high track state should be able to recover relatively high data rate signals (e.g., the XDR channel), while a very low track state indicates that the demodulator may not be able to handle even relatively low data rate signals (e.g., the LDR channel). The noise power-based factor is a secondary, signal-to-noise ratio (SNR)-based figure of merit representative of the ratio of received power (Pr) to noise power spectral density (No) at the demodulator's signal receiving aperture. The higher the Pr/No, the higher SNR, and thus the lower the bit error rate (BER).

Pursuant to the invention, whichever demodulator exhibits the 'best' tracking performance, namely, has independently acquired the highest tracking state, or, in the case where each demodulator has independently acquired the same tracking state, then whichever demodulator has a Pr/No that exceeds the Pr/No of the other demodulator(s) by a prescribed differential may be designated as a 'master' demodulator, while the other demodulator(s) may be designated as a 'slave' demodulator. The master demodulator's timing and frequency errors are controllably used to establish operational parameters of the Kalman filter operator of the slave demodulator. This serves to ensure that should it become necessary to change or 'hand over' the receiver terminal's signal recovery path from the master demodulator to the slave demodulator, the slave demodulator will be able to immediately take over for the previous master terminal and thereby ensure continuous signal tracking and recovery.

A demodulator changeover may be required, for example, when the (previously unobscured) LOS to the satellite from the signal receiving aperture of the master demodulator becomes impaired, while the (previously obscured) LOS to the satellite from the signal receiving aperture of the slave demodulator becomes clear. Such an antenna obscuration reversal may result, for example, from a change in the heading of a ship upon which the spatially diverse receiver antennas for the respective demodulators are mounted. Continuously supplying tracking control parameters to a (slave) demodulator, whose timing and frequency recovery circuits would otherwise be subject to drift due to (an obscuration-based) lack of reception of a downlink sync signal from the transmitter, enables the slave demodulator to take over signal acquisition and data recovery of the downlinked signal, when the signal reception capability (e.g., LOS to the satellite of the signal receiving aperture) of the master demodulator becomes impaired.

Because the demodulators' signal reception apertures are spatially diverse, their respective ranges to the satellite will differ (albeit slightly) - resulting in differences in times of arrival of signals downlinked from the satellite. These differences in arrival times, in turn, produce differences in timing and frequency error measurements that are used to update the demodulators' Kalman filter kinematic state vectors. Pursuant to the invention, such time of arrival differences, and resulting error measurement differences, are taken into account by means of a timing and frequency error correction processor, which is coupled to receive antenna boresight pointing data supplied from each antenna's positioning subsystem.

This antenna pointing information, together with knowledge of the spatial locations of the antennas, is used by the error correction processor to generate 'corrected' range (timing) and rate of change of range (velocity or frequency) measurement data, which is made available to the 'other' (slave) demodulator, namely, the demodulator other than the demodulator at whose antenna downlinked signals from the transmitter (satellite) have been received. As a result, should one of the demodulator's be unable to independently track (timing and frequency errors in) the downlinked signals, for example, in the case of an obscuration or blockage in the field of view of its antenna, the fact that it receives corrected time and frequency variations in the synchronization signals received by the unobstructed signal receiving aperture of the other demodulator will enable the one demodulator to be 'slaved' to reliable tracking information, and thereby continuously maintain its Kalman filter-based time and frequency tracker module 'in sync' with the transmitter.

As pointed out above, the primary figure of merit for determining whether a demodulator may operate independently track the downlink signals (and potentially serve as the master), or whether it must be 'slaved' to another (master) demodulator, is the track state of each demodulator's Kalman filter. As described above with reference to Figure 3, and detailed in the '868 application, each demodulator's track state is controlled by its track state control processor, which selectively allows the demodulator's Kalman filter to operate with a prescribed satellite-receiver terminal configuration (e.g., LDR, MDR or XDR data rate) on the basis of kinematic state estimates. Namely, whichever demodulator has independently acquired the highest tracking state may be employed as a 'master' demodulator. Typically, although not necessarily, the signal reception aperture of the master demodulator will have an unobstructed view of the transmitter (satellite).

In this invention the "master/slave" relationships are maintained separately per data channel or beam between the two (or more) demodulation systems. However, other instantiations may find it beneficial to maintain fewer "master/slave" relationships such as for hardware simplicity. This design choice is not excluded by the present invention.

In some situations it is possible that each demodulator's antenna has an unobstructed view of the satellite (which may occur, for example, where the ship's heading is orthogonal to each antenna's LOS to the satellite, and there is no (superstructure) blockage of the antennas). Then there is a reasonable likelihood that each demodulator will independently acquire the same tracking state. In a case such as this (where both demodulators can independently support the same tracking state), the secondary figure of merit (Pr/No) is examined to determine whether a demodulator is be 'slaved' to the other demodulator. As a non-limiting example, if one of the demodulators has a Pr/No that exceeds the Pr/No of the other demodulator(s) by a prescribed differential (typically 3 dB), then that one demodulator will be allowed to track independent of the other demodulator, and may be designated as the 'master' so long as the power differential is maintained.

As noted briefly above, a particularly beneficial aspect of the present invention its use of the master demodulator's timing and frequency error measurement data (as corrected by the correction processor to account for range and velocity offsets between the signal receiving apertures of the master and slave demodulators) to maintain the tracking state of the Kalman filter operator of the slave demodulator, whose self-determined tracking state may be extremely poor (e.g., null or zero, as a result of its signal receiving aperture being completely obscured (as by a ship's mast)), in-sync with the transmitter. This serves to maintain each demodulator in the 'best' possible tracking state to avoid potential interruption in the signal tracking and recovery capability of the receiver terminal.

Thus, for example, should the LOS of the antenna of the current master demodulator become obscured (and thereby cause its tracking ability to be severely degraded or lost) while, at the same time, the antenna of the slave demodulator becomes unobstructed (as may occur for a reversal of heading of the ship), the fact that the slave demodulator has continued to receive (geometry-corrected) Kalman filter timing and frequency error measurement updates from the master demodulator enables the slave demodulator to successfully continue the task of tracking the sync signals downlinked from the satellite, so that service over each of the (LDR, MDR and XDR) channels or beams is not interrupted. Also a subsequent reversal of the roles of "master" and "slave" will occur when certain conditions (as detailed below) are met.

Figure 1 diagrammatically illustrates a non-limiting, reduced complexity, example of a satellite communication (SATCOM) system of the type described in the above-referenced '868 application;

Figure 2 is a pictorial diagram illustrating kinematic variables in the satellite communication system of Figure 1;

Figure 3 diagrammatically illustrates the overall architecture of a satellite receiver terminal, including a front end demodulator and Kalman filter-based time/frequency tracker (TFT) module disclosed in the '868 application;

Figure 4 diagrammatically illustrates the manner in which a receiver terminal antenna, that is supported in the vicinity of the bow of a ship, has an essentially unobstructed view to a satellite for a first heading of the ship;

Figure 5 diagrammatically illustrates the manner in which the view to the satellite by the shipboard receiver terminal antenna of Figure 4 is obstructed by the superstructure of the ship for a second heading of the ship;

Figure 6 diagrammatically illustrates a spatial diverse receiving aperture-configured, multi-demodulator receiver system according to the present invention as applied to the shipboard environment of Figures 1-5;

Figure 7 diagrammatically illustrates the geometry relationship among spatially diverse signal receiving apertures (antennas) relative to a remote transmitter (satellite);

Figures 8 diagrammatically illustrates the geometry relationship between a pair of spatially diverse antenna locations and a remote transmitter that has different transmitting locations relative to the antennas;

Figure 9 diagrammatically illustrates non-parallel line of sight and parallel line-modeled line of sight geometry relationships between spatially diverse antennas and a remote transmitter; and

Figure 10 is a decision table employed by the present invention to determine whether a demodulator is allowed to operate independently, or is to be slaved to another (master) demodulator.

Before detailing the structure and operation of the track state- and received noise power-based demodulator selection mechanism in accordance with the present invention, it should be observed that the invention resides primarily in a prescribed arrangement of conventional communication signal collection, processing circuits and components, and supervisory digital control circuitry that controls the operations of these circuits and components, and not in the details thereof. As a consequence, in the drawings, such circuits and components, and the manner in which they are interfaced with various communication equipments have, for the most part, been illustrated by readily understandable block diagrams, which show only those specific details that are pertinent to the present invention, so as not to obscure the disclosure with details readily apparent to those skilled in the art having the benefit of the description herein. Thus, the diagrammatic illustrations are primarily intended to show the respective functionalities and operational effects of the various components of the invention in convenient functional groupings, whereby the present invention may be more readily understood.

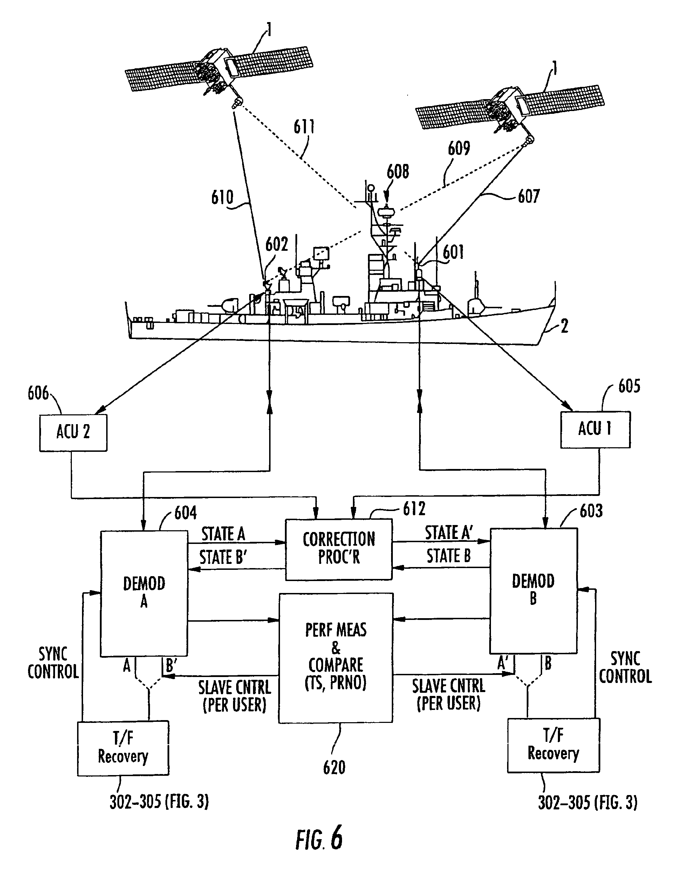

Attention is now directed to Figure 6, which diagrammatically illustrates a non-limiting example of a spatial diversity receiver system that incorporates the track state- and received noise power-based demodulator selection mechanism of the invention, for the non-limiting example of the shipboard environment of Figures 1-5. In particular, Figure 6 shows a plurality of spaced apart signal receiving apertures/antennas 601 and 602, outputs of which are coupled to associated demodulators 603 and 604, and pointing directions of which are maintained aimed at the satellite by respective antenna positioning subsystems (antenna control units (ACUs)) 605 and 606.

As described previously, the signal processing architecture of each demodulator, per se, may correspond to that disclosed in the '868 application and shown in Figure 3, described above. In order to reduce the complexity of the drawings, the receiver system of Figure 6 includes two spaced apart antennas (and associated demodulators). It is to be noted, however, that the invention is not limited to use with this or any particular number of antennas and demodulators. What is necessary is that there be plural antenna/demodulator subsystems having respectively different signal receiving capabilities (e.g., views of the transmitter) the number of which is sufficient to ensure continuous coverage to the satellite, such as hemispherical coverage in the case of a terrestrially deployed (e.g., shipboard) system.

In the illustrated shipboard example, antennas 601 and 602 are supported in the vicinities of the bow and stern, respectively, of ship 2, and have different visibility obstructions relative to satellite 1. For the ship heading shown, bow-associated antenna 601 has a relatively unobscured view of the satellite forward of the ship along a boresight axis, shown by solid line 607, while the ship's superstructure 608 impairs the line of sight to the satellite, shown by broken lines 609, of the generally rearward looking stern-associated antenna 602. Where the ship's heading is reversed to that shown in Figure 6, stern-associated antenna 602 will have a relatively unobscured view of the satellite 1, along the solid line boresight axis 610, rearward of the ship, while the superstructure 608 will impair the line of sight to the satellite, shown by broken lines 611, of the forward looking, bow-associated antenna 601.

Because antennas 601 and 602 are spatially diverse, their respective ranges to (and thereby times of reception of signals downlinked from) the satellite will differ. As noted previously, this differential time of arrival of downlinked signals from the satellite produces differences in the timing and frequency error measurements that are used to update the Kalman filter kinematic state vectors of demodulators 603 and 604. Additional to the impact of spatial diversity is the potential for motion of the receive apertures due to net translational motion along the LOS to the satellite and also roll, pitch and yaw motion of the receiving platform. Pursuant to the invention, such time of arrival differences and resulting error measurement differences are taken into account, by means of a timing and frequency error correction processor 612, which is coupled to receive antenna boresight pointing data supplied from the antenna positioning subsystems 605 and 606.

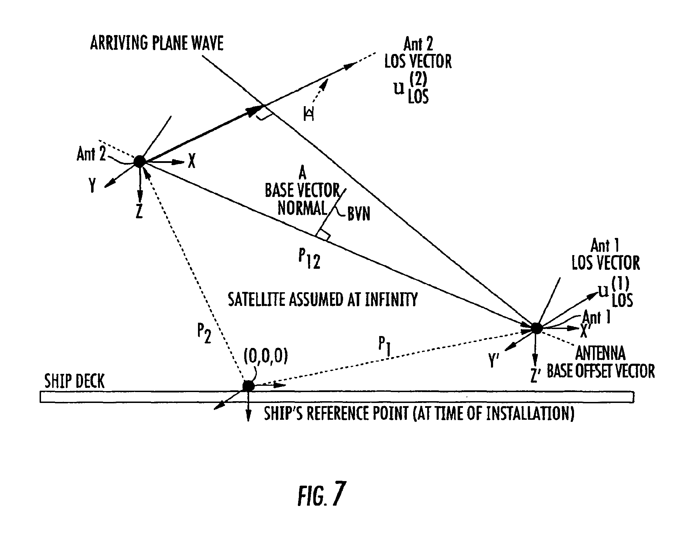

As will be described below with reference to Figure 7, error correction processor 612 uses this boresight pointing data and knowledge of the spatial locations of the antennas to generate 'geometry-corrected' versions of the range (timing) and rate of change of range (velocity or frequency) measurement data derived from each demodulator's antenna. This corrected data is then made available to the 'other' demodulator, whose antenna is spatially displaced from the antenna where the measurements were originally taken. Thus, for the example of Figure 6, measurement data (State B) derived by demodulator 603 (Dernod B) for downlinked signals it receives from its antenna 601 will be 'corrected' by error correction processor 612 to account for the spatial separation between antenna 601 and antenna 602, and the corrected measurement data (State B') will then be made available by processor 612 to demodulator 604. Conversely, measurement data derived (State A) by demodulator 604 (Demod A) for downlinked signals it receives from its antenna 602 will be 'corrected' by error correction processor 612 to account for the spatial separation between the antennas, and the corrected measurement data (State A') will then be made available to demodulator 603.

As a consequence, should one of the demodulator's (e.g., demodulator 603) be unable to independently track (timing and frequency errors in) the downlinked signals, for example, in the case of an obscuration or blockage in the field of view of its antenna (601), the fact that it receives from the correction processor 612 (corrected) time and frequency variations in the synchronization signals received by the unobstructed signal receiving aperture (antenna 602) of the other demodulator 604 will enable the one demodulator (603) to be 'slaved' to reliable tracking information (State A'), and thereby continuously maintain its Kalman filter-based time and frequency tracker module 'in sync' with the transmitter.

Whether demodulators 603 and 604 are allowed to operate in independent mode (in which case, a demodulator's Kalman filter is updated in accordance with its own tracking measurements), or in dependent mode (in which case, a demodulator is 'slaved' to 'corrected' tracking measurements conducted by another (master) demodulator), is governed by the performance measurement processor 620, which is coupled to process track state and noise power measurement data that it receives from demodulators 603 and 604. As will be described processor 620 selectively controls which of the two sets of timing and frequency error measurements (State A/State A' or State B/State B') are to be used to update the demodulators' timing and frequency recovery subsystems (302-305, shown in Figure 3, described above).

The manner in which the spatial diversity-based correction values (State A', State B') are derived by error correction processor 612 may be readily understood by an examination of the geometry diagram of Figure 7, which shows the spatial relationship among the antennas and the satellite. In Figure 7, the antennas 601 and 602 of the shipboard environment example of Figure 6 are respectively denoted as antennas Ant1 and Ant2, whose spatial locations of a local reference coordinate system on the ship have respective coordinates (X',Y',Z') and (X,Y,Z), relative to some reference (origin) location (0,0,0), for example a prescribed point on the ship's deck.

As such, a first antenna position vector $p_1$ may be defined between the reference location and antenna Ant1, a second antenna position vector $p_2$ may be defined between the reference location and antenna Ant2, and a base offset vector $p_{12}$ may be defined between antenna Ant1 and antenna Ant2. Also, a first LOS vector $u_{LOS}^{(1)}$ may be defined between antenna Ant1 and the satellite, while a second LOS vector $u_{LOS}^{(2)}$ may be defined between antenna Ant2 and the satellite. Additionally shown in Figure 7 is the intersection of a line, denoted as a base vector normal (BVN), which extends from the satellite and orthogonally intersects the offset vector $P_{12}$. Further illustrated is a line PW, which represents a plane wave that has been emitted by the satellite, at the time that the signal impinges upon antenna Ant1, but has not yet arrived at antenna Ant2, due the fact that antenna Ant2 is farther away from the satellite than antenna Ant1. For the geometry diagram of Figure 7, the following spatial conditions may be defined.

For a given antenna, all gimbal axes (are assumed to) intersect at a common point, which is defined to be the origin of the base coordinate system. The unit vector components are the corrected components removing biases typical of standard installation practices. Hence:

1) the x-y planes describing each base coordinate system form parallel planes, 2) the x-axes between base coordinate systems are parallel, 3)the axes of the base coordinate systems are parallel, and aligned in the directions of the ship's reference system (i.e. x-axes parallel to the bow, y-axes out the starboard side, z-axes down toward "center of earth") - otherwise, the two LOS vectors are not "in" the same reference system, as the offset vector $p_{12}$ and a dot product would be meaningless, since two vectors to be "dotted" must be defined using a common coordinate system.

It may be noted that $\mathbf{p_{12}} \cdot \mathbf{u} = (\mathbf{p_1} - \mathbf{p_2}) \cdot \mathbf{u} = \mathbf{p_1} \cdot \mathbf{u} - \mathbf{p_2} \cdot \mathbf{u}$, and for the individual products to make sense a common co-ordinate frame (with the exception of translation) is required). The LOS vectors are, to a good approximation in the example application parallel with respect to either base coordinate frame (i.e., angular offsets are negligible).

The actual ship's reference point need not be fixed, but simply known (at some time prior to acquisition) so that the base offset vector $p_{12}$ can be computed.

Antenna Ant 1 is the reference antenna for range lead and range rate measurements. This is merely for convenience and any reasonable reference point may be chosen with appropriate modification of the mathematics.

As noted above, the axes attached to the antenna bases define a local reference coordinate system, using the respective base coordinate systems. The local base systems have their origins defined using the ship's reference point (origin: (0,0,0)). The exact components of the origins in the ship reference system are not necessary; all that is required is the vector difference (i.e., the antenna base offset vector), for computation of the predicted terminal aperture range and range-rate offset.

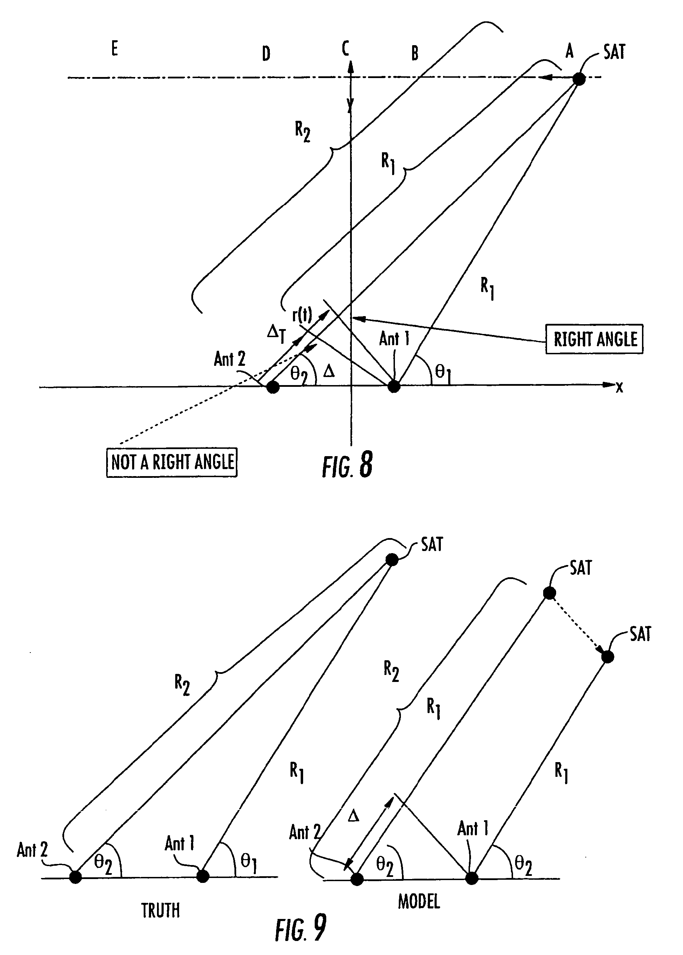

As will be detailed below with reference to Figures 8 and 9, line of sight (LOS) vectors from each antenna to the satellite may validly assumed to be parallel in the ship's reference system, even considering the closest approach of any satellite and the maximum distance between bases. The coordinates of the line of sight vectors are normalized to provide a unit length. By virtue of the alignment (i.e., physical antenna pedestal/base installation and bias removal processing) of the antennas' coordinate systems, their unit LOS vectors are essentially defined within a common global frame (i.e., ship reference frame) and the local frames are co-aligned, such that the components of each vector in each antenna's base coordinate system can be directly applied in the other antenna's coordinate system without any transformation.

The manner in which the correction processor computes the range lead or differential $\Delta$ of antenna Ant1 relative to antenna Ant2 is as follows.

As set forth above, and shown in Figure 7, the base offset vector $P_{12}$ is defined as:

$$\mathbf{p}_{12} = \mathbf{p}_1 - \mathbf{p}_2 \text{ (computed in the ship reference frame)}$$

The geometric range lead (e.g., shorter path length to satellite) of antenna Ant1 with respect to antenna Ant2 (a greater lead is a more positive value of $\Delta$) with the LOS unit vector given in either antenna Ant2's base coordinates or the ship reference coordinates (e.g. angular errors are negligible), may be expressed as:

$$\Delta = \frac{\mathbf{p}_{12} \bullet \mathbf{u}_{LOS}^{(2)}}{\left\| \mathbf{u}_{LOS}^{(2)} \right\|} = \mathbf{p}_{12} \bullet \mathbf{u}_{LOS}^{(2)} = \left\| \mathbf{p}_{12} \right\| \left\| \mathbf{u}_{LOS}^{(2)} \right\| \cos(\theta_{up_{12}}) = \left\| \mathbf{p}_{12} \right\| \cos(\theta_{up_{12}}) = \Delta_{12}$$

The predicted range correction depends on which antenna is providing the measurement and which antenna is blocked. The geometrically predicted range correction may be defined by the following Table 1.

TABLE 1

| Measurement Antenna | Blocked Antenna | Geometric Range Lead $\Delta$ (Measurement) | Geometric Range Correction for Blocked Antenna | Comments (Antenna Ant1 is assumed to be closer to the satellite) |
|---|---|---|---|---|
| Ant1 | Ant2 | $\Delta_{12} >= 0$ | $\Delta_{12}$ | Ant1 is geometrically 'earlier' than Ant2. Effect: adds path length for ANT2 |
| Ant1 | Ant2 | $\Delta_{12} < 0$ | $\Delta_{12}$ | Ant2 is geometrically 'earlier' then Ant1. Effect: subtracts path length for Ant2 |
| Ant2 | Ant1 | $\Delta_{12} >= 0$ | $-\Delta_{12}$ | Ant1 is geometrically 'earlier' than Ant2. Effect: subtracts path length for Ant1 |
| Ant2 | Ant1 | $\Delta_{12} < 0$ | $-\Delta_{12}$ | Ant2 is geometrically 'earlier' than Ant1. |

(continued)

| Measurement Antenna | Blocked Antenna | Geometric Range Lead $\Delta$ (Measurement) | Geometric Range Correction for Blocked Antenna | Comments (Antenna Ant1 is assumed to be closer to the satellite) |
|---|---|---|---|---|
| | | | | Effect: adds (positive) path length for Ant1 |

Notes: • A negative lead is a positive lag.
• Comments (last column) are for reference only when Ant1 is closer to the satellite than ANT2.
• Corrections are proper regardless of orientation and naming convention of the antennas.
• Geometric range lead requires knowledge of **u** and $\mathbf{p}_{12}$

The end result is that when the geometric range lead measurements are derived from (unblocked) antenna Ant2, the sign is inverted, otherwise (i.e., when antenna Ant1 is unblocked), the sign is left unaltered.

Lastly, if there is an installation (path length) difference L between the path length for antenna Ant2 and antenna Ant1, namely:

$$\texttt{L = path length for Ant2 - path length for Ant1}$$

then, the ranges per logical beam are related by:

$$\mathbf{R_2 = R_1 + \Delta_{12} + L}$$

It should be noted that the above ranges are not necessarily the range states carried in the Kalman filter, as the former relate to actual propagation paths. The Kalman range states may be modified with time-updates scaled by the speed-of-light to reflect range corrections. The range offset term involving $\Delta_{12}$ and L provides the offset of the Kalman state for range between the two receiving systems.

The range rate offset $\dot{\Delta}$ induced by the antenna placement geometry may be determined by differentiating the above vector dot products, namely:

$$\dot{\Delta} = \frac{1}{\left\|\mathbf{u}_{LOS}^{(2)}\right\|}\left(\dot{\mathbf{p}}_{12} \cdot \mathbf{u}_{LOS}^{(2)} + \mathbf{p}_{12} \cdot \dot{\mathbf{u}}_{LOS}^{(2)}\right)$$

$$= \frac{1}{\left\|\mathbf{u}_{LOS}^{(2)}\right\|}\left(0 + \left\|\dot{\mathbf{u}}_{LOS}^{(2)}\right\| \left\|\mathbf{p}_{12}\right\| \cos(\theta_{\dot{u}p_{12}})\right)$$

$$= \left\|\dot{\mathbf{u}}_{LOS}^{(2)}\right\| \left\|\mathbf{p}_{12}\right\| \cos(\theta_{\dot{u}p_{12}}) = -\left\|\mathbf{p}_{12}\right\|\sin(\theta_{up_{12}})\dot{\theta}_{up_{12}} = \dot{\Delta}_{12}$$

Therefore,

$$\dot{R}_2 = \dot{R}_1 + \dot{\Delta}_{12} + \dot{L} = \dot{R}_1 + \dot{\Delta}_{12}$$

The offset $\dot{\Delta}_{12}$ is the (total) range-rate difference, defined as antenna Ant2's LOS range rate minus antenna Ant1's range rate, due to geometric considerations on the LOS due to all motion (i.e., three degrees of freedom translation and six degrees of freedom micro-motion) components.

The required frequency compensation may be derived as follows:

$$f_{LOS\_offset} = -\dot{\rho}\frac{f_o}{c}$$

In the above expression, the negative sign is due to the Doppler shift (relative to a nominal freq or freq on the unblocked antenna) required for an opening $\dot{\Delta}_{12} > 0$ and closing $\dot{\Delta}_{12} < 0$ motion relative to the satellite. The range rate correction may be defined by the following Table 2.

TABLE 2

| Measurement Antenna | Blocked Antenna | Geometric Range Rate (Computed) | Geometric Range Rate Correction for Blocked Antenna | Comments |
|---|---|---|---|---|
| Ant1 | Ant2 | $\dot{\Delta}_{12} >= 0$ | $\dot{\rho} = \dot{\Delta}_{12}$ | Ant2 geometrically opening its range to satellite with respect to Ant1. Effect: Commands a lower frequency for Ant2 than Ant1 |
| Ant1 | Ant2 | $\dot{\Delta}_{12} < 0$ | $\dot{\rho} = \dot{\Delta}_{12}$ | Ant2 geometrically closing its range to satellite with respect to Ant1. Effect: Commands a higher frequency for Ant2 than Ant1 |
| Ant2 | Ant1 | $\dot{\Delta}_{12} >= 0$ | $\dot{\rho} = -\dot{\Delta}_{12}$ | Ant2 geometrically opening range to the satellite with respect to Ant1. Effect: Commands a higher frequency for Ant1 than Ant2 |
| Ant2 | Ant1 | $\dot{\Delta}_{12} < 0$ | $\dot{\rho} = -\dot{\Delta}_{12}$ | Ant2 geometrically closing range to the satellite with respect to Ant1. Effect: Commands a lower frequency for Ant1 than Ant2 |

Notes: • A negative rate of change in range (i.e., closing or decreasing distance) induces an 'up'-shifted frequency (i.e. positive Doppler).
• Comments (last column) are for reference only, when Ant1 is closer to the satellite than Ant2.
• Corrections are proper regardless of orientation and naming convention of antennas.
• Geometric range rate requires knowledge of **u** and **p₁₂**

In order to estimate the geometrically induced range-rate of change, the time derivative of the LOS unit vector is needed. In the present system this is not directly available, and requires the use of a numerical approximation. A non-limiting example of such an approximation is:

$$\dot{\mathbf{u}}_{LOS}^{(2)} = \frac{d}{dt}\dot{\mathbf{u}}_{LOS}^{(2)} = \frac{du_x}{dt}\mathbf{i} + \frac{du_y}{dt}\mathbf{j} + \frac{du_z}{dt}\mathbf{k}$$

$$= \lim_{\Delta t \longrightarrow 0} \frac{u_x(t_0+\Delta t)-u_x(t_0)}{\Delta t}\mathbf{i} + \frac{u_y(t_0+\Delta t)-u_y(t_0)}{\Delta t}\mathbf{j} + \frac{u_z(t_0+\Delta t)-u_z(t_0)}{\Delta t}\mathbf{k}$$

$$\approx \frac{u_x(t_0+\Delta t)-u_x(t_0)}{\Delta t}\mathbf{i} + \frac{u_y(t_0+\Delta t)-u_y(t_0)}{\Delta t}\mathbf{j} + \frac{u_z(t_0+\Delta t)-u_z(t_0)}{\Delta t}\mathbf{k}$$

A principal feature is that the time order of the unit LOS vectors available from the antenna control unit can be component-wise differenced to produce an estimate of the range-rate vector. This is a reasonable approximation, as the LOS vectors are part of accelerometer measurement data, referred previously (which may be provided at nominally 10 ms intervals, for example, which is considerably shorter than effects of roll, pitch and yaw micro-motions). This differentiation may be defined by a three-point (end difference) formula and will be usable without any prefiltering on the LOS vectors, prior to the derivative computation. Such a three-point formula provides some measure against "noise spikes" on that LOS data by increasing (doubling) the timebase for slope computation (over typical successive difference approaches), while not introducing a lag in computation. The computational lag referred to is that of the typical central difference approaches typical of many approaches to numerical differentiation. The end difference formula provides the most recent estimate of the derivative using the data available. This serves to maintain a "current value" (e.g., no more than 10 ms old) for usage, as soon as the state vector message arrives. This message arrives periodically where the period is set by the tolerable inter-processor communication capacity and computational resources. It is generally beneficial to exchange data as frequently as possible, however the benefit accumulated at periods below about 50 ms is limited in utility.

The three-point right-end difference (Kreyszig, Advanced Engineering Mathematics, 5th Edition, Chap. 19) formula is given by:

$$f'(x_k) = \frac{1}{2h}\left(3f(x_k)-4f(x_k-h)+f(x_k-2h)+\frac{h^2}{3}f^{(3)}(\xi)\right) \quad 0 \le \xi \le 2h$$

Therefore, to approximate the first-derivative of the function $f$ at the point $x_k$, samples spaced at $h = \Delta t = 10$ ms are used, resulting in:

$$f'(x_k) \approx f_k = \frac{1}{2h}\left(3f_k - 4f_{k-1} + f_{k-2}\right)$$

In the course of executing the geometric projection calculations, described above, the following terminology and conventions should be noted.

The terms 'along', 'on', and 'onto' are synonyms in vector calculus. Geometrically, a line has no inherent positive/negative direction - unlike a ray, which has starting point and direction, like a vector. By contrast, a line continues in both directions. A vector in a co-ordinate frame geometrically defines a line (which is defined by two points). A vector has an initial point (possibly the origin of the co-ordinate reference frame) and a direction (from which to pick a second point). The phrase "in the direction of a" provides the reference, where a 'positive' sense is defined as in the same direction as **a** and a 'negative' sense is defined in the opposite direction to **a** .

The proj$_\mathbf{a}$ **v** symbol in mathematics terminology is:

The (orthogonal) projection of **v** 'on' **a**
The (orthogonal) projection of **v** 'onto' **a**
The (orthogonal) projection of **v** 'along' **a**

As a consequence, the proj$_\mathbf{a}$ **v** is a vector along/onto/on **a** (read as: along/in/onto a line defined by a vector **a**) with sense/direction with respect to a given by the scalar projection of **v** in the direction of **a**. The components of the projected vector, e.g., **z**, are expressed with respect to the point (typically the co-ordinate reference frame origin for **a**) and the definition/components of the vector **a** or line described by the vector **a** in the reference frame. The components of **z**, the projected vector, are not referenced to the vector **a** as the positive reference direction for **z**.

The projection of **v** along **a** (or proj$_a$ **v**) results in a vector **z** along/on/collinear/onto the line defined by the vector **a**. The components of **z** are given by the common reference frame describing the coordinates for the vectors **v** and **a**. This way when **z** and **a** are drawn together, which requires a common frame, if they are in opposite directions (such as when the scalar projection of **v** in the direction of **a** is negative) they graphically appear that way.

In other words, 'along' **a**, 'onto' **a**, 'on' **a** (by common usage in vector calculus) does not indicate +/- sense, and by itself (without explicit support of a directional reference). Along **a** might be interpreted (albeit incorrectly) to mean using 'along' the line defined by vector **a**, with a positive reference direction defined by the direction of **a** (regardless of the convention used to express the components of **a** in the n-dimensional reference space) since vectors have direction. However, common usage of the term 'along' **a** only implies that the vector is parallel to or collinear with, the line defined by **a**. The usage of the terminology 'along' **a** does not mean 'in the direction of' **a**.

Thus, the phrase "projection of **v** along **a**" (common usage) may be more clearly stated as the projection of **v** collinear with the line defined by the vector **a** (where the line, as stated above, does not have +/- sense). The projected vector will take the appropriate orientation with respect to **a** in the reference frame as defined by the coordinate reference frame, positive-direction unit vectors. If the direction of the projection relative to the vector **a** is desired, either the scalar projection of **v** in the direction of **a** or the scalar product of **z** in the direction of **a**, must be computed, as both yield the same result.

This can be seen by defining the projected vector as:

$$\mathbf{z} = \frac{(\mathbf{a} \cdot \mathbf{v})\mathbf{a}}{\|\mathbf{a}\|^2}$$

and then computing the

the scalar projection of **v** in the direction of **a**, and

the scalar projection of **z** in the direction of **a**.

The definition of the scalar is projection of **v** in the direction of **a** is as follows:

$$\mathbf{v} \cdot \frac{\mathbf{a}}{\|\mathbf{a}\|} = \frac{\mathbf{v} \cdot \mathbf{a}}{\|\mathbf{a}\|} = \|\mathbf{v}\| \cos(\theta_{va})$$

This scalar projection of **z** in the direction of **a** is:

$$\frac{\mathbf{z} \cdot \mathbf{a}}{\|\mathbf{a}\|} = \left[ \frac{(\mathbf{v} \cdot \mathbf{a})\mathbf{a}}{\|\mathbf{a}\|} \right] \cdot \frac{\mathbf{a}}{\|\mathbf{a}\|} = \left[ \frac{(\mathbf{v} \cdot \mathbf{a})\mathbf{a}}{\|\mathbf{a}\|^2} \right] \cdot \mathbf{a}$$

which can be simplified two ways.

The first, which is straightforward, makes use of two identities:

$$k(\mathbf{v} \cdot \mathbf{a}) = (k\mathbf{v} \cdot \mathbf{a}) = (\mathbf{v} \cdot k\mathbf{a}) \quad \text{and} \quad (\mathbf{v} \cdot \mathbf{v}) = \|\mathbf{v}\|^2$$

Simplifying the above equation for the scalar projection produces:

$$\frac{\mathbf{z} \cdot \mathbf{a}}{\|\mathbf{a}\|} = \mathbf{z} \cdot \frac{\mathbf{a}}{\|\mathbf{a}\|} = \left[\frac{(\mathbf{v} \cdot \mathbf{a})\mathbf{a}}{\|\mathbf{a}\|^2}\right] \cdot \frac{\mathbf{a}}{\|\mathbf{a}\|} = \frac{1}{\|\mathbf{a}\|} \frac{(\mathbf{v} \cdot \mathbf{a})}{\|\mathbf{a}\|^2}(\mathbf{a} \cdot \mathbf{a}) = \frac{\mathbf{v} \cdot \mathbf{a}}{\|\mathbf{a}\|}$$

$$\text{where } \frac{\mathbf{v} \cdot \mathbf{a}}{\|\mathbf{a}\|} = \|\mathbf{v}\| \cos(\theta_{va}).$$

Thus, the two scalar projections produce the same result. Expressing this in a different way produces:

$$\frac{\mathbf{z} \cdot \mathbf{a}}{\|\mathbf{a}\|} = \|\mathbf{z}\| \cos(\theta_{za}) = \left\|\frac{(\mathbf{v} \cdot \mathbf{a})\mathbf{a}}{\|\mathbf{a}\|^2}\right\| \cos(\theta_{za}) = \frac{1}{\|\mathbf{a}\|}|\mathbf{v} \cdot \mathbf{a}|\cos(\theta_{za}) = \|\mathbf{v}\||\cos(\theta_{va})|\cos(\theta_{za})$$

where $\theta_{za}$ is either 0 or 180-degrees, while $\theta_{va}$ is any angle defined by the geometry of the vectors.

For the vector projection of **v** along **a**, the dot product: (**v·a**) thereof is used to determine the angle between two vectors and, if **a** is a unit vector, then it is the scalar projection of **v** in the direction of **a.**

The scalar projection of **v** in the direction of **a**: $\dfrac{\mathbf{v} \cdot \mathbf{a}}{\|\mathbf{a}\|}$ may be derived from the dot product, by normalizing it with length of **a** (i.e. converting **a** to unit vector in the direction of **a**), resulting in $\|\mathbf{v}\| \cos(\theta_{va})$. The result is a number, positive, negative, or zero, depending on whether **v** projects onto a straight line defined by **a** in the same direction as **a**, the opposite direction to **a**, or orthogonal to the line.

The vector projection of **v** along

$$\mathbf{a}: \left[\frac{(\mathbf{v} \cdot \mathbf{a})}{\|\mathbf{a}\|}\right]\frac{\mathbf{a}}{\|\mathbf{a}\|} = \frac{(\mathbf{v} \cdot \mathbf{a})\mathbf{a}}{\|\mathbf{a}\|^2}$$

is derived from the scalar projection of **v** in the direction of **a**, by defining a unit vector in the direction of **a**, and multiplying it by the scalar projection of **v** in the direction of **a**.

$$\left[\frac{(\mathbf{v} \cdot \mathbf{a})}{\|\mathbf{a}\|}\right] * \frac{\mathbf{a}}{\|\mathbf{a}\|}$$

is a vector in the same reference system, defining v and **a**.

As pointed out above, the range difference $\Delta$ and the range rate difference $\dot{\Delta}$ are computed based upon the assumption that the LOS vectors from the antennas to the satellite are mutually parallel from the antennas to the satellite. That this assumption is valid may be appreciated from the geometry diagrams of Figures 8 and 9, as follows.

First, it should be recognized that the LOS vectors are not truly parallel, because the antennas are pointed to the same location in three-dimensional space. However, because the range to the aim-point (satellite) overwhelmingly dominates the separation between the antennas, for all possible satellite positions (e.g., A, B, C, D, E, shown in Figure 8), through geometric analysis, it can be shown that the individual LOS vectors can be very well modeled as parallel.

More particularly, the true relative range difference $\Delta_T$ (note the orthogonal projection in Figure 8) and relative range-rate difference $\dot{\Delta}_T$ can be expressed as follows, where subscripts 1 and 2 are associated with antennas Ant'1 and Ant2, respectively:

$$R_2(t) = \Delta_T(t) + R_1(t) = \Delta(t) - r(t) + R_1(t)$$

$$\dot{R}_2(t) = \dot{\Delta}_T(t) + \dot{R}_1(t) = \dot{\Delta}(t) - \dot{r}(t) + \dot{R}_1(t)$$

$$\theta_1(t) \neq \theta_2(t)$$

$\Delta(t)$ is the orthogonal projection of the baseline separation onto the path between antenna Ant2 and the satellite. The term $r(t)$ is due to the "overlap" of the length $R_1$ (on the $R_2$ path) and the orthogonal projection (on the $R_2$ path). This overlap is caused by the different elevation angles for antenna Ant1 and antenna Ant 2 to the satellite. The overlap $r(t)$ is generally much smaller than $\Delta(t)$ and, under the modeling assumption of parallel LOS vectors, $r(t) = 0$. When the range to the satellite is large compared to the antenna separation, $r(t)$ approaches 0 (as the LOS vectors become more parallel), but $\Delta(t)$ need not go to zero. On the basis of this parallel LOS assumption (and using antenna Ant 2 as "defining" the elevation angle), the geometry may be redrawn as shown in Figure 9, which shows "true" (non-parallel) LOS vectors, and a "parallel" model.

In the parallel LOS diagram of Figure 9, antenna Ant 1 could equivalently have been chosen to define the elevation angle; in that case, the geometry would have the LOS of antenna Ant2 "pitched higher" to be parallel with the LOS of antenna Ant 1.

From elementary mathematical manipulations (assuming parallel LOS vectors) the modeled path length and range-rate differences are:

$$\Delta = \mathbf{p}_{12} \bullet \mathbf{u}_2 = \|\mathbf{p}_{12}\| \|\mathbf{u}_2\| \cos(\theta_2(t))$$

- Result of orthogonal projection

$$\dot{\Delta} = \mathbf{p}_{12} \bullet \dot{\mathbf{u}}_2 = -\|\mathbf{p}_{12}\| \|\mathbf{u}_2\| \sin(\theta_2(t)) \frac{d\theta_2}{dt} = -\|\mathbf{p}_{12}\| \sin(\theta_2(t)) \frac{d\theta_2}{dt}$$

As geometric range offset (timing correction) values and geometric range rate (frequency) correction values are periodically (e.g., at the above exemplary rate of 100 Hz (or every 10 ms)) derived by the error correction processor in the manner described above with reference to Figures 7-9, the error correction processor uses these values to controllably correct timing and frequency error measurements that it receives from each demodulator, to produce a set of'corrected' timing and frequency error measurements (state A', state B') which it makes available to the kinematic state estimate processor of the Kalman filter of the other demodulator. As described above, this allows the other demodulator, whose ability to receive signals downlinked from the satellite may be impaired (e.g., as in the case of a superstructure blockage of the slave demodulator's antenna's field of view), to maintain its Kalman filter-based time and frequency tracker module 'in sync' with the transmitter.

Whether a respective demodulator is allowed to operate in an independent mode (in which case, its Kalman filter is updated in accordance with its own tracking measurements), or in dependent mode (in which case, it is 'slaved' to 'corrected' tracking measurements conducted by another (master) demodulator), is governed by the performance measurement processor 620 of the system of Figure 6. As described briefly above, performance measurement processor 620 is coupled to process track state and noise power measurement data that it receives from each demodulator, and then selectively controls which of these sets of timing and frequency error measurements are to be used to update a respective demodulator's Kalman filter.

The availability of both of these sets of timing and frequency error measurements is denoted in Figure 6 as states A and B, which are associated with original (uncorrected) measurements from demodulators A(604) and B(603), and state A' which corresponds to measurements derived by way of antenna 602, to which demodulator A(604) is coupled, and corrected by correction processor 612, and state B' which corresponds to measurements derived by way of antenna 601, to which demodulator B(603) is coupled, and corrected by correction processor 612.

For this purpose, performance measurement processor 620 looks at two figures of merit assigned to each demodulator.

A first (and primary) figure of merit is the track state of the demodulator per data channel. As detailed in the '868 application, the track state is a quantized value representative of how well that demodulator's Kalman filter is performing. It is important to note that a demodulator actually The higher the demodulator's track state for a given data channel (or beam), the better demodulator's (Kalman filter) performance, which means that a demodulator having a very high track state should be able to recover relatively high data rate signals, while a very low track state indicates that the demodulator may not be able to handle even relatively low data rate signals

A second, (subsidiary) figure of merit is a signal-to-noise ratio (SNR)-based quantity representative of ratio of the energy per bit (Eb) or received power (Pr) to the spectral noise density (No) at the demodulator's signal receiving aperture.

Whichever demodulator exhibits the 'best' tracking performance, namely, has independently acquired the highest tracking state, or, in the case where each demodulator has independently acquired the same tracking state, then whichever demodulator has a Pr/No that exceeds the Pr/No of the other demodulator(s) by a prescribed differential may be designated as a 'master' demodulator, while the other demodulator(s) may be designated as a 'slave' demodulator.

The master demodulator's timing and frequency errors are then controllably used to establish operational parameters of the Kalman filter operator of the slave demodulator. This serves to ensure that, should it become necessary to change or hand over' the receiver terminal's signal recovery path from the current master demodulator to the slave demodulator, the slave demodulator will be able to immediately take over for the previous master demodulator, so that no downlinked hops or frames will be lost. A demodulator changeover may be required, for example, when the (previously unobscured) LOS to the satellite from the signal receiving aperture of the master demodulator becomes impaired, while the (previously obscured) LOS to the satellite from the signal receiving aperture of the slave demodulator becomes clear.

Such an antenna obscuration reversal may result, for example, from a change in the heading of a ship upon which the spatially diverse receiver antennas for the respective demodulators are mounted. Continuously supplying tracking control parameters to a (slave) demodulator whose timing and frequency recovery circuits would otherwise be subject to drift due to (an obscuration-based) lack of reception of a downlink sync signal from the transmitter enables the slave demodulator to take over signal acquisition and data recovery of the downlinked signal, when the signal reception capability (e.g., LOS to the satellite of the signal receiving aperture) of the master demodulator becomes impaired.

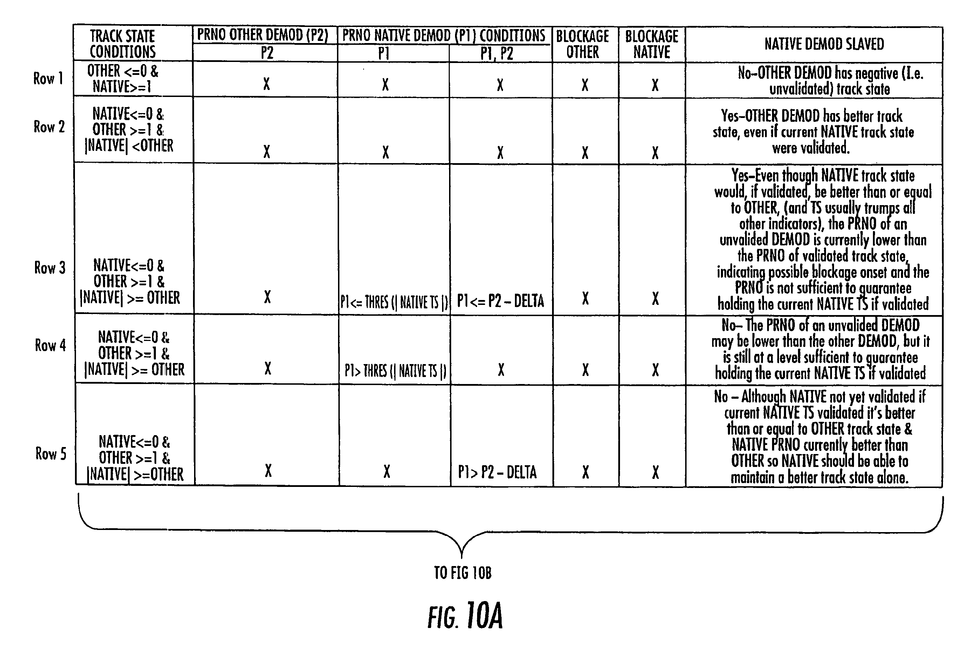

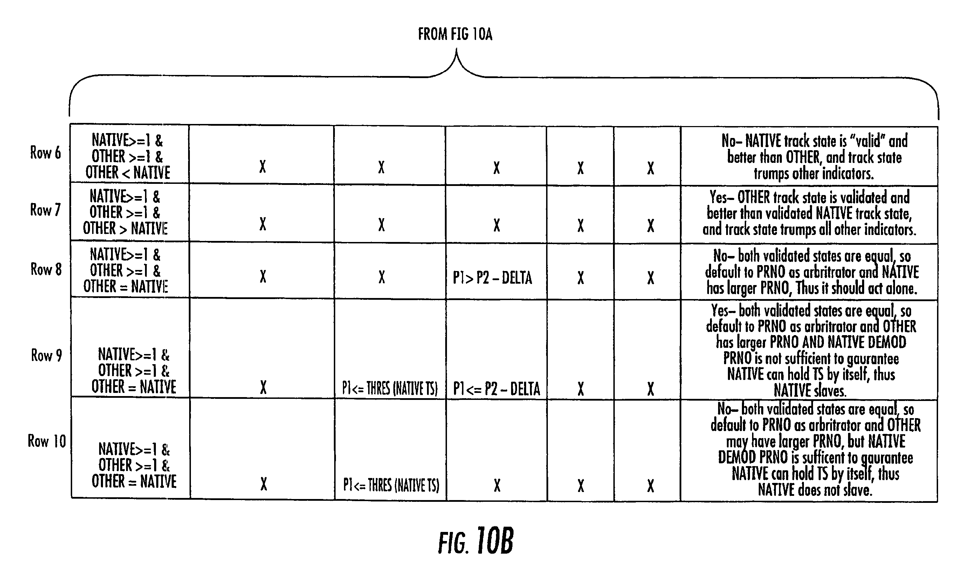

Attention is now directed to Figure 10, which is a decision table that is employed by the supervisory control processor 602 (of Figure 6) to determine whether a demodulator is allowed to operate independently (meaning that it does not require timing and frequency error inputs (as corrected by the correction processor) from the other demodulator) and may therefore be a master demodulator), or whether it cannot operate independently, but must be slaved to another demodulator, from which it derives and frequency error inputs (as geometry-corrected by the error correction processor.

Moreover, for a multi-channel (or multi-beam) system, such as using the L, M, and X data channels or separate downlink beams as in the example detailed above, the demodulator master/slave decisions are made on a per channel/beam basis. This means that even though the track state and PRNO performance of a given demodulator may be inadequate to support tracking and recovery of a relatively high data rate channel (e.g., XDR) channel), so that the demodulator may need to be slaved to the other demodulator for such a channel, the track state and PRNO performance of the demodulator may be sufficient to allow the demodulator to independently support tracking and recovery of one or more reduced data rate channels (e.g., the LDR and MDR channels), without being slaved to the other demodulator. It is important to recall that in this application the synchronization resources useful to derive the tracking performance are pre-allocated by the transmitter on a per beam (or per data channel basis) without regard to the operation or impairments of the reception system. Hence it is entirely possible that a demodulator, which hosts separate tracking functions for the L, M, and X beams, can achieve different track states for each beam type.

The table in Figure 10 codifies the rules implemented in the supervisory control processor 620. The table is executed on a per data channel (or per beam) basis, plus an additional "pass" for the fused velocity state. As such in the present case 4 "master/slave" decisions will be rendered. For clarification, the demodulator structure carries up to 3 independent time corrections (i.e., 1 for each of L,M and X) and a single common (fused) frequency correction. The frequency correction is common because all the motion components affecting a single demod are common amongst the L, M and X beams (or data sources).

In the table of Figure 10, the term 'native' is used to identify the demodulator for which the decision is being made, while the term 'other' identifies the other demodulator(s). The term P1 refers to the Pr/No (labelled PRNO) for the native demodulator, while the term P2 refers to the Pr/No for the other demodulator. The term 'blockage' indicates whether or not the LOS of the antenna of the demodulator is obscured. 'X' indicates a "don't care" condition concerning the decision.

For the system diagram of Figure 6, in the course of executing the decision table of Figure 10 on measurement data it receives from demodulator 603, performance measurement processor 620 would consider demodulator 603 (DEMOD B) to be the 'native' demodulator and would consider demodulator 604 (DEMOD A) to be the 'other' demodulator. Conversely, when applying the decision table to the measurement data it receives from demodulator 604, performance measurement processor 620 would consider demodulator 604 (DEMOD A) to be the 'native' demodulator and would consider demodulator 603 (DEMOD B) to be the 'other' demodulator.

For the first or top row (ROW 1) of the table, the native demodulator (DEMOD) is shown as having a positive (>=1) polarity track state, while the other demodulator is shown as having a non-positive (<=0) or negative polarity track state. As described briefly above, a positive or negative polarity indicates whether the track state has been independently acquired by the demodulator ('positive' track state), or has been specified by another (master) demodulator, rather than having been independently acquired ('negative' track state). A demodulator having a negative track state cannot operate independently (and thereby serve as the master demodulator), but must derive timing and frequency error measurements (as corrected by the correction processor) from another (master) demodulator. The use of the track state polarity prevents oscillation of the master/slave roles of the demodulators. In normal applications it is expected that a demod, once slaved and initially set to a negative track state, will "emancipate" itself by maintaining the "slaved to" track state using its own measurements. Once a demod can hold the track state it has been "salved to" on its own, then its current track state is signed positive. A positive track state is a necessary condition to assert mastership in the system.

Continuing with the ROW 1 example, PRNO and blockage conditions for both demodulators are "don't cares". The current state of the native demodulator, as specified in the column labelled NATIVE DEMOD SLAVED' is No' or'Not slaved', since the native demodulator has a positive track state and the other demodulator has a negative track state.

For the second row (ROW 2) of the table, the native demodulator is shown as having a negative (<=0) track state, while the other demodulator is shown as having a positive (>=1) track state. Also, the absolute value of the track state of the native demodulator is less than the track state of the other demodulator. PRNO and blockage conditions for both demodulators are "don't cares". The current state of the native demodulator is 'Yes' or 'Slaved', since the other demodulator has a 'better' track state (higher value - even in absolute terms) than the native demodulator. Namely, even if the native demodulator is able to independently acquire and thereby validate its current track state, and thereby change its track state's negative polarity precursor to a positive polarity, the resulting value of the track state of the native demodulator would still be less than that of the other demodulator, so that the native demodulator cannot operate independently, and must remain slaved to the other demodulator.

For the third row (ROW 3) of the table, the native demodulator is shown as having a negative (<=0) track state, the other demodulator is shown as having a positive (>=1) track state, and the absolute value of the track state of the native demodulator is not less than the track state of the other demodulator. Blockage conditions for both demodulators and the PRNO (P2) for the other demodulator are "don't cares". Also, the PRNO (P1) for the native demodulator is less than or equal to a threshold Thres (|Native TS|), and the difference (delta) between the PRNO (P2) of the other demodulator and the PRNO (P1) of the native demodulator is greater than a prescribed value (i.e., P2-P1 >= delta). The Thres () parameter is a power test to determine if the 'native' demod should be able to hold the current state (considering the receiver SNR) on its own once sufficient data is collected. The power difference test is used to enforce a condition that one aperture should have some "strong" preference for being selected.

As a consequence of the tests in ROW 3, the current state of the native demodulator is 'Yes' or 'Slaved' to the other demodulator. This is due to the fact that, even if the native demodulator is able to independently acquire and thereby validate (change to a positive polarity) its current track state, so that its track state would be at least equal to that of the other demodulator, the PRNO (P1) of the native demodulator is currently less than the PRNO (P2) of the other demodulator by a prescribed value (delta). This implies a potential blockage onset of the antenna of the native demodulator, and the difference between the two PRNO values is not sufficient to ensure that the native demodulator will be able to hold its current track state.

For the fourth row (ROW 4) of the table, the native demodulator is shown as having a negative (<=0) track state, the other demodulator is shown as having a positive (>=1) track state, and the absolute value of the track state of the native demodulator is not less than the track state of the other demodulator. Blockage conditions for both demodulators and the PRNO (P2) for the other demodulator are "don't cares", and the PRNO (P1) for the native demodulator is greater than the threshold Thres (|Native TS|). As a consequence, the current state of the native demodulator is 'No' or 'Not slaved'. This is due to the fact that, even though the native demodulator currently has a negative track state, its PRNO (P1) is sufficiently large (greater than the threshold Thres), to ensure that the native demodulator will be able to hold its track state, once that track state has been independently acquired.

For the fifth row (ROW 5) of the table, the native demodulator is shown as having a negative (<=0) track state, the other demodulator is shown as having a positive (>=1) track state, and the absolute value of the track state of the native demodulator is not less than the track state of the other demodulator. Blockage conditions and the PRNOs (P1 and P2) for both demodulators are "don't cares". Also, the PRNO (P1) for the native demodulator exceeds the PRNO (P2) for the other demodulator by the prescribed value (delta). As a consequence, the current state of the native demodulator is 'No' or 'Not slaved'. This is due to the fact that, even though the native demodulator currently has a negative track state, its PRNO (P1) is sufficiently larger than the PRNO (P2) of the other demodulator, to ensure that the native demodulator will be able to hold its track state, once that track state has been independently acquired.

For the sixth row (ROW 6) of the table, both demodulators are shown as having positive track states, and the absolute value of the track state of the native demodulator is greater than the track state of the other demodulator. All other parameters are "don't cares". As a consequence, the current state of the native demodulator is 'No' or 'Not slaved', since the native demodulator currently has a positive track state that exceeds that of the other demodulator.

For the seventh row (ROW 7) of the table, both demodulators are shown as having positive track states, and the absolute value of the track state of the native demodulator is less than the track state of the other demodulator. All other parameters are "don't cares". As a consequence, the current state of the native demodulator is 'Yes' or 'Slaved', since the other demodulator currently has a positive track state that exceeds that of the native demodulator.

For the eighth row (ROW 8) of the table, both demodulators are shown as having the same positive track state, and Blockage conditions and the PRNOs (P and P2) for both demodulators are don't cares. Also, the PRNO (P1) for the native demodulator exceeds the PRNO (P2) for the other demodulator by the prescribed value (delta). As a consequence, the current state of the native demodulator is No' or 'Not slaved'. This is due to the fact that, since both demodulators have the same positive track state, the decision will depend upon the PRNO (P1) of the native demodulator which, in this case, is sufficiently larger than the PRNO (P2) of the other demodulator, so that the native demodulator is to operate independently, and not be slaved to the other demodulator.

For the ninth row (ROW 9) of the table, both demodulators are shown as having the same positive track state, and Blockage conditions for both demodulators are dont cares. However, the PRNO (P1) for the native demodulator is less than or equal to the threshold Thres (|Native TS|), and the difference (delta) between the PRNO (P2) of the other demodulator and the PRNO (P1) of the native demodulator is greater than a prescribed value (i.e., P2-P1 >= delta). As a consequence, the current state of the native demodulator is 'Yes' or 'Slaved' to the other demodulator. This is due to the fact that, since both demodulators have the same positive track state, the decision will depend upon the PRNO (P1) of the native demodulator which, in this case, is currently less than the PRNO (P2) of the other demodulator by the prescribed value (delta). This implies a potential blockage onset of the antenna of the native demodulator, and the difference between the two PRNO values is not sufficient to ensure that the native demodulator will be able to hold its current track state.

For the tenth row (ROW 10) of the table, both demodulators are shown as having the same positive track state, and Blockage conditions for both demodulators and the PRNO (P2) for the other demodulator are don't cares, while the PRNO (P1) for the native demodulator is greater than the threshold Thres (|Native TS|). As a consequence, the current state of the native demodulator is 'No' or 'Not slaved'. This is due to the fact that, because the native demodulator has a valid tracking state that is not less than that of the other demodulator, and its PRNO (P1) is sufficiently large (greater than the threshold Thres), then even if the PRNO (P2) of the other demodulator (which is a don't care) is larger than that of the native demodulator, the fact the PRNO (P1) of the native demodulator will be able to hold its current track state.

The manner in which a handover (switching or transitioning) between demodulators, master and slave roles of which have been determined in accordance with the decision table of Figure 10, detailed above, will now be described.

As it receives tracking state and PRNO information from each of demodulators 603 and 604, performance measurement processor 620 executes the decision table of Figure 10 to determine whether or not a respective demodulator's beam tracking system is to use its own measurement data, or is to accept handover data for each parameter (i.e., range states and fused velocity state) from the other demodulator. For each parameter slaved in the native demodulator, the Kalman state and state error covariance matrix is adjusted accordingly. The current Kalman state is updated by the delta corrections and the delta corrections are applied to the range states and velocity states as additions to the current values. The current Kalman iteration's state error covariance matrix is then modified as described below.

Parameter-based track state updates (i.e., hand-overs) are effected by overwriting or 'jamming' a parameter into a track state in the demod to be slaved. Also, as part of the processing the Kalman filter of the slaved demod has its state error covariance of the parameters 'jammed' assigned a value depending on the track state jammed, and the off-diagonal terms per parameter 'jammed' are set to zero as shown by the example below. The remainder of the state error covariance matrix is unchanged.

Example: Assuming there are 3 data source timing (range) states and a single common velocity state the state error covariance matrix after 'jamming' a single range & fused velocity state, say the L beam, to a degraded track state TS.

$$P_k = \begin{bmatrix} \sigma^2(TS) & 0 & 0 & 0 \\ 0 & X & X & 0 \\ 0 & X & X & 0 \\ 0 & 0 & 0 & \sigma_v^2(TS) \end{bmatrix}$$

The "X" indicates that those entries can remain unchanged from the previous iteration of the filter.

The degrading of a track state with 'jamming' states can occur when a demodulator is blocked for long periods of time (so that is slaved to another 'master' demodulator) and the slave demodulator is following a degrading master (e.g., the yet to be validated state will not hold the state over the lack of PRNO versus even a lower validated state).

The PRNO is only altered by direct downlink observation and not by a 'jamming operation'. When parameters are overwritten ('jammed') and/or track states are improved, the PRNO is left unchanged, since improved track states should have larger PRNOs (as time/frequency offset errors are reduced).

Also, when an aperture is obscured (a common cause of slaving or hand-over) the PRNO is not updated with "zero measurements". While this is a possibly a desirable addition to some operational scenarios, it is not chosen in the present example. There are many possible methods to "age" PRNO estimates each with attendant strengths and weaknesses for a particular application.

In addition to updating the state error covariance as shown above, the measurement covariance matrix R used in the Kalman filter must also be updated. One approach is to modify the matrix R so that the measurement variances used are the ones indicated by the track state only during the most recently collected sync pulse (and neglecting past history which is a-typical of normal recursive Kalman operations). The possible advantage of this approach is that some measurements, likely the "older" ones, have been collected with variances larger than currently indicated in the Kalman filter. This causes an under-weighing of the measurement error. And the effect is to make the demodulator more confident in the linear projections than on the actual measurements in multi-pulse collections. An alternate approach is to set measurement variances in R at the beginning of collection cycle so that measurement variance always over-bounds measurement variance for any pulse collected. This gives the demodulator more confidence in the measurements than projections. The application at hand dictates the approach adopted. The present embodiment uses the latter option.

To avoid possible "ping-ponging" of track state exchanges for range states without any real data being measured, a demodulator "Inhibit" may be used. The "inhibit" has been codified in the present invention as a track state less than zero. The concept of a negative track state conveys two important properties for the proper operation of the system. First, the negative value for a parameter indicates that the parameter has been recently "jammed" and has yet to be validated. Second the numeric value of the track state indicates what level of performance is to be measured (by the lock detectors) to signal that the track state can be held independent of the "master" demodulator. In short, once a demodulator parameter is 'jammed' (i.e., 'slaved") to a new track state (i.e., not within the same state), it cannot assert that track state (as the master demodulator) until it is 'validated' by downlink measurements independently conducted, by that demodulator and a PRNO threshold. However, the native demodulator, even if slaved, can still accept commands from the other demodulator (as the master). The native demodulator will internally maintain the track state, and report the negative of the track state to the error correction processor. To 'validate' measurements lock detection thresholds for negative track states are modified from their positive track state counterparts. The reason is to make it somewhat easier for a demod to "recover" and operate independently. The operational concept of the lock detection sub-system is the same for a "slave" or "master" or independent demod system. Note that "native" demod (based on figure 10) may not be slaved to the "other", but this does not necessarily imply the "native" will be the "master". Depending on the situation, the rules in figure 10 offer a peer-peer option where neither demod "jams" its data to the other. The peer-peer option is not explicit in the table but merely a consequence of a sequence of "no slaving" decisions for each demod.

To implement the decision rules in figure 10, the track states per parameter per demod are needed. The track states for the range states per DEMOD are readily determined, as each logical beam (e.g., L, M, X data sources) in each demodulator has its own track state and PRNO indicator.

To apply the decision rules of the table of Figure 10, described above, to the frequency state between the demodulators, a single track state and PRNO are determined for each demodulator within a respective demodulator: the frequency state track state is selected based on the "best" track state. The beam with the "better" track state also contributes that beam's PRNO to the frequency state. The 'best' beam for the frequency state is determined by the logical beam with the largest positive track state, unless both track states are negative. In this case, the logical beam with the "most negative" track state is used. When the all beams have equal track states (when both are positive or negative), then the 'best' beam (within a given demodulator) is set by the current PRNO between the two beams.

The selection of the 'best beam' is based upon which beam has lower time/frequency errors (i.e., better positive track state) which is expected to have a larger PRNO. The PRNOs from validated beams (i.e., positive track states) are preferred over PRNOs of non-validated beams (i.e., negative track states). This is based upon the fact that, when a range state is 'jammed' the PRNO is not reset, so that the PRNO estimate cannot be assured to be valid until the state is validated. However, while the state is being 'validated', the PRNO should react to prevailing link blockage and time/frequency errors. As a result, for negative track state beams, the PRNO may be used as a secondary variable, as shown in the decision table of Figure 10, described above.

Under the condition that all NATIVE track states are negative, no track state is 'validated', and the PRNO of the most negative beam is selected. This selection is based upon the fact that the more negative track state should have a higher PRNO, if the downlink is observable, while the state is being validated. If the link is not observable, or the time/frequency error is excessive, the PRNO of both states will decrease. Once the PRNO drops sufficiently, a lower validated track state will be selected to 'jam' and degrade the negative track state to a lower track state as set forth in the decision table of Figure 10, described above.

We now describe the timing and frequency error detector operation after a "jam" or "slave" operation. Two sub-systems operative in this operation are the time and frequency error detection (TFED) subsystem and lock detection subsystem. In the case when the sync hop type is commanded to change for a parameter, such as a 'range state', all the previous error measurements collected are 'flushed' or discarded, and a new error collection process on that parameter is initiated. This procedure is required, since the demodulators may have their Kalman measurement cycles offset from each other per parameter, and even within the same demodulator across parameters. This measurement 'flush' clears useless data from consideration and restarts the collect for the desired sync hop types. This is part of the period of time needed to validate a track state for a "slaved" demod until it can "emancipate" itself by holding the commanded track state using its own measurements.

The prevailing condition for "emancipation" is indicated by the lock detection sub-system (LDS). The LDS monitors a set number of the most recent time and frequency error measurements results, in this case typically 25 of each are used, and based on the majority voting of those results the current track state is validated or not. A point of clarification is made here. While both the sequence of time and frequency error measurements is individually thresholded in the TFED and majority voted separately in the LDS, the lock detector logic requires unanimous consent from both time and frequency for "validation". Otherwise the state is not validated. In fact if the error measurements indicate performance is poor enough, the TFED and LDS can indicate that the track state is to degrade for a given parameter, even for a negative track state (e.g., move towards zero track state). Under this condition the degradation (i.e., assuming a lower track state) will occur if no other demod can assume the "master" role at that time.

The error measurement thresholds in the TFED are track state dependent and depend on the given application. Two primary factors in selecting the threshold values and even the number of track states is 1) the data rate range to support and 2) the modulation types/formats. This is because some modulation formats are more sensitive or tolerant to various timing or frequency error levels, as well as, the error levels for various data rates can be substantially different as one skilled art appreciates.

Returning to the concept of "slaving", even a demodulator that has been "turned off' or shutdown can be recovered by 'jamming' operations. Shutdown occurs when all track states are 0 in the 'native' demodulator. In this case, the 'other' demodulator, if functioning, can 'jam' the 'native' demodulator back into operation.

When the track state of a parameter is altered, either by the 'native' demodulator performing autonomous processing, or by 'jamming', (i.e., tracking data handover) the TFED and lock detector sub-systems for a demod are affected. The operation of the TFED and LDS sub-systems was highlighted above for the 'jamming' operation. A more detailed description follows.

As an overview, the lock detectors comprise a circular buffer of the most recent T time and F frequency error measurements and a second processing structure holding ternary values (i.e., +1 for improve vote, 0 hold vote, -1 for degrade vote) regarding the lock detector decision per measurement cycle. The values of T and F are subject to selection in individual application where the typical engineering issues of data collection speed and robustness to outliers is needed.

The buffered raw time/frequency errors are 'filtered' prior to ternary threshold logic, to determine the current lock detector decision (i.e., improve (+1), degrade (-1), remain unchanged (0)). The 'filtering' is performed in the TFED and is basically a comparison process. Each error measurement is compared to a range of values, dependent on the current track state. The TFED system has separate thresholds for improving/degrading the track states for time and frequency errors (frequency error is per beam and not the fused velocity state). The thresholds require testing in individual applications to obtain suitable performance. The LDS takes the ternary decisions per measurement from the TFED system (i.e., improve track state (+1), degrade track state (-1), or leave alone (0) ) and "votes" them to determine the appropriate action to take on the track state for a parameter. The "voting" operation is an arithmetic summation over the measurement window of T time errors and F frequency errors.

Under the condition that a beam has a positive track state degraded (i.e. moved towards zero), the lock detector ternary decisions are all set to zero and the error measurement data is all set to a nominal value that is dependent on the track state assumed. When a demodulator receives a "range" jam, it alters the track state to a negative value, for the beam of the native demodulator being 'jammed', and causes the time lock detector error measurements (for that beam only) to be set to a prescribed value dependent on the track state and the time ternary decisions are cleared. The frequency lock detector ternary decisions are then set to zero.

When a demodulator receives a "velocity" jam, the track state of each beam is left unaltered, and causes the frequency lock detector error measurements for all beams are set to a value dependent on the track state and the time ternary decisions are cleared. The time lock detector ternary decisions are then set to zero for all beams.

When a negative track state is degraded (i.e., moved towards zero), the lock detector ternary decisions are all set to zero and the error measurement data is all set to a nominal value that is dependent on the track state assumed. When a track state is 'validated' (i.e., changed from negative to positive) only the ternary decisions are zeroed, the error measurements are retained. When a (positive) track state is improved only the ternary decisions are zeroed, the error measurements are retained.

The following methodology may be used to handle to 'jamming' and track state definitions. Range (time) 'jams' are done first, so that the proper track state is carried into velocity (frequency) 'jam' operations. When a beam has its 'range' state altered, it alters that beam's TS and thus the range state value. The 'jam' occurs because the corresponding beam in the other demodulator has been able to achieve a better track state (e.g., lower time and frequency errors). The range 'jam' alters the beam's track state. Since the range state value is uniquely mapped to a beam. This causes the time lock detector error measurements (for that beam only) to be set to a value that is dependent on the track state, and the time ternary decisions are cleared. Now error measurements will be gathered, in an attempt to validate the track state 'jammed' from the other demodulator.

The range 'jam' operation also sets the frequency lock detector (for the same data channel only) ternary decisions to zero. This serves to prevent the 'jammed' beams frequency detector decisions from issuing a "degrade", before the requisite number of time errors for such a decision is collected. In other words, it synchronizes the time/frequency detector decisions. The demodulator will attempt to 'validate' the new track state, using the time errors to be collected with the new setting and the prevailing frequency errors. The frequency errors are 'left over' prior to the time 'jam'.

There may exist situations where a particular beam or data channel is 'jammed' because its track state is too low, but the demodulator may have sufficient velocity state information (i.e., low enough frequency errors in another beam or data channel) as indicated by a very good track state. In these cases, a 'range' jam occurs without a corresponding 'velocity' jam, hence, we have a 'range-only' jam.

A 'velocity' (frequency) jam will, at times, occur co-incidentally with a 'range' jam. In this case, at least one beam will have its time and frequency error measurements and decisions altered. However, there are conditions where a velocity-only 'jam' may take place. If so, the frequency error detectors are affected. The operations for a velocity "jam" (alone or in concert with a range "jam") are as follows.

First, the track state of each beam is left unaltered, due to the track state and PRNO conditions, and the fact that the velocity state is a fusion of all beams, so that, unlike range state data, the velocity state is not uniquely attributable to any one beam or track state. Second, the frequency lock detector error measurements for all beams is set to a value dependent on the track state, and time ternary decisions are cleared. This is based upon the fact that new error measurements will be gathered referenced to the new fused velocity state now available from the other demodulator. Third, the time lock detector ternary decisions are to zero for all beams. This serves to delay any beam's degrade decision (based on time errors), before the requisite number of frequency errors for such a decision is collected. In other words, it synchronizes the time/frequency detector decisions.

For the non-limiting example of shipboard downlink tracking, such as in the above described example, and using the rules of the decision table of Figure 10, the following operational rules are imposed to provide proper operation. The rules may not necessary or desirable in all applications, and also additional rules may be desirable considering other potential applications.

Rule 1: The track state of the native demodulator will be asserted negative, when being 'range' jammed by the other demodulator to any, even the same, track state level. This 'range'-jam will flush the lock detectors and alter thresholds for a range 'jam'.

Rule 2: The native demodulator, upon exiting a negative track state, e.g. -TS < 0, produces a track state of either TS > 0 (i.e., validation of jammed state), or -TS+1 (i.e. degraded track state), and the native demodulator cannot enter track state (-TS-1), or track state (TS+1) (i.e., a better track state) directly from track state (-TS).

Rule 3: The native demodulator's track state for a beam goes from negative to positive (i.e., from track state (-TS) to track state (TS)) when the lock detector reports a 'lock' for that beam. Only ternary decisions are zeroed, and the error measurements are retained.

Rule 4: If the native demodulator's track state degrades from a negative track state (e.g., from negative track state (-TS) to track state (-TS+1)) autonomously (i.e., unslaved or independent operation), then the native demodulator's lock detectors for that beam are flushed at the entrance to track state (-TS+1) (i.e., degraded state). Ternary decisions are all set to zero, and the raw time/frequency errors are set to a nominal value, dependent on the track state for a 'jammed' track state.

Rule 5: If the native demodulator's track state degrades from a negative track state (e.g., track state (-TS) to track state (-TS+1)) by virtue of a 'range' jam, the jamming will flush the lock detectors, and alter thresholds.

Rule 6: A native demodulator in a positive track state can 'degrade' its track state due to lock detector results. Degradations are only possible, in response to planned sync hop measurement times. After a Kalman assimilation loop, the track state manager alters the track state. When a positive track state (TS) goes to a lower track state (TS-1) (i.e., degrades), the ternary decisions are flushed, and the preceding error measurements in the lock detectors are set to a nominal track state dependent value.

Rule 7: A native demodulator in a positive track state can 'improve' its track state, due to lock detector results. Improvements are only possible in response to planned measurement times. After a Kalman assimilation loop, the track state manager alters the track state. When a positive track state (TS) goes to a higher track state (TS+1) (i.e., improves) only the ternary decisions are flushed, and the preceding error measurements in the lock detectors are retained.

Rule 8: As noted previously the native and other demodulators cannot have negative track states for a parameter, simultaneously, since a demodulator have a negative track state cannot be asserted as the master demodulator.

Rule 9: The following factors may be noted regarding operational decisions. First PRNO estimators never reset under any conditions. Second, the PRNO level of native demodulator can enable a beam to be independently validated or 'emancipated' from the other demodulator, even for a native demodulator's negative track state of a track state level equal to or better than that of the other demodulator for that beam. Third, a native demodulator in negative track state can autonomously degrade (track state ->0), due to missing detection opportunities, while the PRNO of the native demodulator is greater than the PRNO of the other demodulator. Fourth, when the PRNO of the other demodulator by a delta is larger than the native demodulator's PRNO by a delta, the native demodulator is regarded as being unable to observe downlink beam and will be "slaved" to the other demodulator, as shown in the decision table of Figure 10.

## Claims

1. For use with a communication system having a transmitter terminal that is operative to transmit one or more communication signals from one or more different communication signal sources operating at respectively different data rates, over respective one or more associated communication links toward a receiver terminal, said receiver terminal having a plurality of spaced apart signal receiving apertures and associated demodulators coupled thereto, each demodulator having a time/frequency tracker, that is operative to acquire and track time and frequency variations in synchronization signals conveyed over said one or more communication links, so as to synchronize receiver clocks of said demodulators with clock signals embedded in said one or more communication signals downlinked from said transmitter terminal, by carrying out timing error and frequency error measurements on said synchronization signals, and wherein characteristics of said time/frequency tracker are updated in accordance with data representative of said timing error and frequency error measurements, and in accordance with data representative of kinematic domain measurements carried out with respect to said plurality of spaced apart signal receiving apertures, a method of controllably updating characteristics of the time/frequency trackers of said demodulators, said method comprising the steps of:

   (a) monitoring one or more operational characteristics of said demodulators; and
   (b) updating characteristics of the time/frequency tracker of a respective demodulator in accordance with timing error and frequency error measurements derived from a selected one of said demodulators, that is selected in accordance with a prescribed relationship between said one or more operational characteristics of said respective demodulator and said one or more operational characteristics of another of said demodulators.

2. The method according to claim 1, wherein said one or more operational characteristics of said demodulators include at least one tracking states of the time/frequency trackers thereof, and ratios of power (Pr) to noise power spectral density (No) received by said demodulators.

3. The method according to claim 1, wherein
   step (a) comprises monitoring first and second operational characteristics of each of said demodulators, and wherein step (b) comprises

   (b1) determining whether said first operational characteristic of said respective demodulator has a prescribed relationship with respect to said first operational characteristic of said another demodulator,

(b2) in response to said first operational characteristic of said respective demodulator having said prescribed relationship with respect to said first operational characteristic of said another demodulator, updating characteristics of the time/frequency tracker of said respective demodulator in accordance with timing error and frequency error measurements derived from said respective demodulator, but

(b3) in response to said first operational characteristic of said respective demodulator not having said prescribed relationship with respect to said first operational characteristic of said another demodulator, determining whether said second operational characteristic of said respective demodulator has a predetermined relationship with respect to said second operational characteristic of said another demodulator, and

(b4) in response to said second operational characteristic of said respective demodulator having said predetermined relationship with respect to said second operational characteristic of said another demodulator, updating characteristics of the time/frequency tracker of said respective demodulator in accordance with timing error and frequency error measurements derived from said respective demodulator, but otherwise updating characteristics of the time/frequency tracker of said respective demodulator in accordance with timing error and frequency error measurements derived from said another demodulator.

4. The method according to claim 3, wherein said first operational characteristic of said respective demodulator comprises the tracking state of the time/frequency tracker of said respective demodulator, and said first operational characteristic of said another demodulator comprises the tracking state of the time/frequency tracker of said another demodulator, and wherein said second operational characteristic of said respective demodulator comprises the ratio of power (Pr) to noise power spectral density (No) received by said respective demodulator, and said second operational characteristic of said another demodulator comprises the ratio of power (Pr) to noise power spectral density (No) received by said another demodulator.

5. The method according to claim 1, wherein step (a) comprises monitoring the tracking state of the time/frequency tracker of each of said demodulators, and wherein step (b) comprises determining whether the tracking state of the time/frequency tracker of said respective demodulator will allow said time/frequency tracker thereof to acquire and track said time and frequency variations in said synchronization signals in accordance with timing error and frequency error measurements carried out thereby on signals received by that one of said plurality of spaced apart signal receiving apertures to which said respective demodulator is coupled and, in response to said tracking state of said time/frequency tracker of said respective demodulator indicating that said time/frequency tracker thereof is able to acquire and track said time and frequency variations in said synchronization signals using timing error and frequency error measurements carried out thereby on signals received by that one of said plurality of spaced apart signal receiving apertures to which said respective demodulator is coupled, assigning a first tracking state designator to said respective demodulator representative that characteristics of the time/frequency tracker of said respective demodulator may be updated in accordance with timing error and frequency error measurements derived therefrom, but, in response to said tracking state of said time/frequency tracker of said respective demodulator indicating that said time/frequency tracker thereof is not able to acquire and track said time and frequency variations in said synchronization signals using timing error and frequency error measurements carried out thereby on signals received by that one of said plurality of spaced apart signal receiving apertures to which said respective demodulator is coupled, assigning a second tracking state designator to said respective demodulator, representative that characteristics of the time/frequency tracker of said respective demodulator may be not be updated in accordance with timing error and frequency error measurements derived therefrom, but must be updated in accordance with timing error and frequency error measurements derived from another demodulator on signals received by the one of said plurality of spaced apart signal receiving apertures to which said another demodulator is coupled and which have been corrected to account for spatial separation between the signal receiving aperture to which said respective demodulator is coupled and said one of said plurality of spaced apart signal receiving apertures to which said another demodulator is coupled.

6. A receiver terminal for use with a communication system having a transmitter terminal that is operative to transmit one or more communication signals from one or more different communication signal sources operating at respectively different data rates, over respective one or more associated communication links, said receiver comprising:

a plurality of spaced apart signal receiving apertures and associated demodulators coupled thereto, each demodulator having a time/frequency tracker, that is operative to acquire and track time and frequency variations in synchronization signals conveyed over said one or more communication links, so as to synchronize receiver clocks of said demodulators with clock signals embedded in said one or more communication signals downlinked from said transmitter terminal, by carrying out timing error and frequency error measurements on said synchronization signals, and wherein characteristics of said time/frequency tracker are updated in accordance with data representative of said timing error and frequency error measurements, and in accordance with data representative of kinematic domain measurements carried out with respect to said plurality of spaced apart signal receiving apertures; and

a controller, coupled to said demodulators, and being operative to monitor one or more operational characteristics of said demodulators, and to update characteristics of the time/frequency tracker of a respective demodulator in accordance with timing error and frequency error measurements derived from a selected one of said demodulators, that is selected in accordance with a prescribed relationship between said one or more operational characteristics of said respective demodulator and said one or more operational characteristics of another of said demodulators, and wherein said controller is operative to correct, as necessary, timing error and frequency error measurements derived from said selected demodulator to account for any spatial separation between the signal receiving aperture to which said respective demodulator is coupled and the signal receiving aperture to which said selected demodulator is coupled.

7. The receiver terminal according to claim 6, wherein said one or more operational characteristics of said demodulators include at least one of tracking states of the time/frequency trackers thereof, and ratios of power (Pr) to noise power spectral density (No) received by said demodulators.

8. The receiver terminal according to claim 6, wherein said controller is operative to monitor first and second operational characteristics of each of said demodulators and, in response to said first operational characteristic of said respective demodulator having a prescribed relationship with respect to said first operational characteristic of said another demodulator, to update characteristics of the time/frequency tracker of said respective demodulator in accordance with timing error and frequency error measurements derived from said respective demodulator but, in response to said first operational characteristic of said respective demodulator not having a prescribed relationship with respect to said first operational characteristic of said another demodulator, to determine whether said second operational characteristic of said respective demodulator has a predetermined relationship with respect to said second operational characteristic of said another demodulator and, in response to said second operational characteristic of said respective demodulator having said predetermined relationship with respect to said second operational characteristic of said another demodulator, to update characteristics of the time/frequency tracker of said respective demodulator in accordance with timing error and frequency error measurements derived from said respective demodulator, but otherwise to update characteristics of the time/frequency tracker of said respective demodulator in accordance with timing error and frequency error measurements derived from said another demodulator.

9. The receiver terminal according to claim 8, wherein said first operational characteristic of said respective demodulator comprises the tracking state of the time/frequency tracker of said respective demodulator, and said first operational characteristic of said another demodulator comprises the tracking state of the time/frequency tracker of said another demodulator, and wherein said second operational characteristic of said respective demodulator comprises the ratio of power (Pr) to noise power spectral density (No) received by said respective demodulator, and said second operational characteristic of said another demodulator comprises the ratio of power (Pr) to noise power spectral density (No) received by said another demodulator.

10. The receiver terminal according to claim 6, wherein said controller is operative to monitor the tracking state of the time/frequency tracker of each of said demodulators, and to determine whether the tracking state of the time/frequency tracker of said respective demodulator will allow said time/frequency tracker thereof to acquire and track said time and frequency variations in said synchronization signals in accordance with timing error and frequency error measurements carried out thereby on signals received by that one of said plurality of spaced apart signal receiving apertures to which said respective demodulator is coupled and, in response to said tracking state of said time/frequency tracker of said respective demodulator indicating that said time/frequency tracker thereof is able to acquire and track said time and frequency variations in said synchronization signals using timing error and frequency error measurements carried out thereby on signals received by that one of said plurality of spaced apart signal receiving apertures to which said respective demodulator is coupled, to assign a first tracking state designator to said respective demodulator representative that characteristics of the time/frequency tracker of said respective demodulator may be updated in accordance with timing error and frequency error measurements derived therefrom, but, in response to said tracking state of said time/frequency tracker of said respective demodulator indicating that said time/frequency tracker thereof is not able to acquire and track said time and frequency variations in said synchronization signals using timing error and frequency error measurements carried out thereby on signals received by that one of said plurality of spaced apart signal receiving apertures to which said respective demodulator is coupled, to assign a second tracking state designator to said respective demodulator, representative that characteristics of the time/frequency tracker of said respective demodulator may be not be updated in accordance with timing error and frequency error measurements derived therefrom, but must be updated in accordance with timing error and frequency error measurements derived from another demodulator on signals received by the one of said plurality of spaced apart signal receiving apertures to which said another demodulator is coupled.

FIG. 1
(PRIOR ART)

MULTIPLE SYNC HOP TYPE RESOURCES PER SOURCE

LDR

MDR

XDR

INDEPENDENT "RANGE"

COMMON PLATFORM VELOCITY
(INDUCES COMMON "DOPPLER")

TRANSLATION
VELOCITY

RECEIVER

"R-P-Y"
VELOCITY AND ACCELERATION

(COMMON "RANGE" AND "DOPPLER")

DATA SOURCE 1 — TIMING JITTER — DELAY 1

DATA SOURCE 2 — TIMING JITTER — DELAY 2

DATA SOURCE N — TIMING JITTER — DELAY N

EP 1 936 835 A2

"UNKNOWN" BUT POSSIBLY AVAILABLE FROM EPHEMERIS PROCESSOR

SHORE IS ZERO
SHIP MEASURED
SUB-M INDIRECT MEASUREMENT
SUB-P UNAVAILABLE

$$\ddot{R}'_{LOS} = \ddot{R}'_{SAT} + \ddot{R}'_{TERM}$$

ESTIMATE AVAILABLE FROM TERMINAL FREQUENCY TRACKER

$$\frac{R'_{ERR}}{c} = \frac{v'_{ERR}}{c} = \gamma \Leftrightarrow f_{ERR} = \gamma f_o$$

$$\frac{R'_{ERR}}{c} = \tau_{ERR}$$

FIG. 2

EP 1 936 835 A2

FIG. 3

EP 1 936 835 A2

FIG. 4

FIG. 5

*FIG. 6*

FIG. 7

FIG. 8

FIG. 9

| | TRACK STATE CONDITIONS | PRNO OTHER DEMOD (P2) P2 | PRNO NATIVE DEMOD (P1) CONDITIONS P1 | PRNO NATIVE DEMOD (P1) CONDITIONS P1, P2 | BLOCKAGE OTHER | BLOCKAGE NATIVE | NATIVE DEMOD SLAVED |
|---|---|---|---|---|---|---|---|
| Row 1 | OTHER <=0 & NATIVE>=1 | X | X | X | X | X | No–OTHER DEMOD has negative (I.e. unvalidated) track state |
| Row 2 | NATIVE<=0 & OTHER >=1 & \|NATIVE\| <OTHER | X | X | X | X | X | Yes–OTHER DEMOD has better track state, even if current NATIVE track state were validated. |
| Row 3 | NATIVE<=0 & OTHER >=1 & \|NATIVE\| >= OTHER | X | P1<= THRES (\| NATIVE TS \|) | P1<= P2 – DELTA | X | X | Yes–Even though NATIVE track state would, if validated, be better than or equal to OTHER, (and TS usually trumps all other indicators), the PRNO of an unvalided DEMOD is currently lower than the PRNO of validated track state, indicating possible blockage onset and the PRNO is not sufficient to guarantee holding the current NATIVE TS if validated |
| Row 4 | NATIVE<=0 & OTHER >=1 & \|NATIVE\| >= OTHER | X | P1> THRES (\| NATIVE TS \|) | X | X | X | No– The PRNO of an unvalided DEMOD may be lower than the other DEMOD, but it is still at a level sufficient to guarantee holding the current NATIVE TS if validated |
| Row 5 | NATIVE<=0 & OTHER >=1 & \|NATIVE\| >=OTHER | X | X | P1> P2 – DELTA | X | X | No – Although NATIVE not yet validated if current NATIVE TS validated it's better than or equal to OTHER track state & NATIVE PRNO currently better than OTHER so NATIVE should be able to maintain a better track state alone. |

TO FIG 10B

*FIG. 10A*

EP 1 936 835 A2

| | | | | | | |
|---|---|---|---|---|---|---|
| Row 6 | NATIVE>=1 & OTHER >=1 & OTHER < NATIVE | X | X | X | X | X | No– NATIVE track state is "valid" and better than OTHER, and track state trumps other indicators. |
| Row 7 | NATIVE>=1 & OTHER >=1 & OTHER > NATIVE | X | X | X | X | X | Yes– OTHER track state is validated and better than validated NATIVE track state, and track state trumps all other indicators. |
| Row 8 | NATIVE>=1 & OTHER >=1 & OTHER = NATIVE | X | X | P1> P2 – DELTA | X | X | No– both validated states are equal, so default to PRNO as arbitrator and NATIVE has larger PRNO, Thus it should act alone. |
| Row 9 | NATIVE>=1 & OTHER >=1 & OTHER = NATIVE | X | P1<= THRES (NATIVE TS) | P1<= P2 – DELTA | X | X | Yes– both validated states are equal, so default to PRNO as arbitrator and OTHER has larger PRNO AND NATIVE DEMOD PRNO is not sufficient to gaurantee NATIVE can hold TS by itself, thus NATIVE slaves. |
| Row 10 | NATIVE>=1 & OTHER >=1 & OTHER = NATIVE | X | P1<= THRES (NATIVE TS) | X | X | X | No– both validated states are equal, so default to PRNO as arbitrator and OTHER may have larger PRNO, but NATIVE DEMOD PRNO is sufficent to gaurantee NATIVE can hold TS by itself, thus NATIVE does not slave. |

FIG. *10B*